# EUROPEAN PATENT SPECIFICATION

(11) **EP 0 632 844 B1**
(45) Date of publication and mention of the grant of the patent: **07.01.1998**
(21) Application number: 91915796.6
(22) Date of filing: 09.05.1991
(51) Int. Cl.: C22C 1/10, C22C 1/09

(54) **PRODUCTION METHODS FOR METAL MATRIX COMPOSITES**
HERSTELLUNGSVERFAHREN VON MMC
PROCEDES DE FABRICATION POUR MATERIAUX COMPOSITES A MATRICE METALLIQUE

(30) Priority: 09.05.1990 US 521195
(43) Date of publication of application: 11.01.1995
(73) Proprietor: LANXIDE TECHNOLOGY COMPANY, LP, Newark, DE 19714-6077 (US)
(72) Inventor: BECKER, Kurt, Joseph, Newark, DE 19713 (US); SCHIROKY, Gerhard, Hans, Hockessin, DE 19707 (US); BURKE, John, Thomas, Hockessin, DE 19707 (US); URQUHART, Andrew, Willard, Newark, DE 19711 (US); WEINSTEIN, Jerry, Glenn, Newark, DE 19711 (US)
(74) Representative: Andrae, Steffen, Dr.
(86) International application number: US9103231
(87) International publication number: WO9118122

(56) References cited:
- EP-A- 261 055
- EP-A- 368 790
- EP-A- 0 280 830
- EP-A- 0 333 629
- EP-A- 0 340 957
- US-A- 3 175 260
- US-A- 3 310 427

## Description

### Technical Field

The present invention relates to a novel process for forming metal matrix composite bodies. Particularly, in a preferred method of the present invention for forming metal matrix composites by a spontaneous infiltration technique, an infiltration enhancer and/or an infiltration enhancer precursor and an infiltrating atmosphere are in communication with a filler material or a preform, at least at some point during the process, which permits molten matrix metal to spontaneously infiltrate the filler material or preform. Such spontaneous infiltration occurs without the requirement for the application of any pressure or vacuum. The molten matrix metal and the filler are provided in a unique manner which enhances the spontaneous infiltration process.

### Background Art

Composite products comprising a metal matrix and a strengthening or reinforcing phase such as ceramic particulates, whiskers, fibers or the like, show great promise for a variety of applications because they combine some of the stiffness and wear resistance of the reinforcing phase with the ductility and toughness of the metal matrix. Generally, a metal matrix composite will show an improvement in such properties as strength, stiffness, contact wear resistance, coefficient of thermal expansion (C.T.E.), density, thermal conductivity and elevated temperature strength retention relative to the matrix metal in monolithic form, but the degree to which any given property may be improved depends largely on the specific constituents, their volume or weight fraction, and how they are processed in forming the composite. In some instances, the composite also may be lighter in weight than the matrix metal per se. Aluminum matrix composites reinforced with ceramics such as silicon carbide in particulate, platelet, or whisker form, for example, are of interest because of their higher specific stiffness (e.g., elastic modulus over density), wear resistance, thermal conductivity, low coefficient of thermal expansion (C.T.E.) and high temperature strength and/or specific strength (e.g., strength over density) relative to aluminum.

Various metallurgical processes have been described for the fabrication of aluminum matrix composites, including methods based on powder metallurgy techniques and liquid-metal infiltration techniques which make use of pressure casting, vacuum casting, stirring, and wetting agents. With powder metallurgy techniques, the metal in the form of a powder and the reinforcing material in the form of a powder, whiskers, chopped fibers, etc., are admixed and then either cold-pressed and sintered, or hot-pressed. The maximum ceramic volume fraction in silicon carbide reinforced aluminum matrix composites produced by this method has been reported to be about 25 volume percent in the case of whiskers, and about 40 volume percent in the case of particulates.

The production of metal matrix composites by powder metallurgy techniques utilizing conventional processes imposes certain limitations with respect to the characteristics of the products attainable. The volume fraction of the ceramic phase in the composite is limited typically, in the case of particulates, to about 40 percent. Also, the pressing operation poses a limit on the practical size attainable. Only relatively simple product shapes are possible without subsequent processing (e.g., forming or machining) or without resorting to complex presses. Also, nonuniform shrinkage during sintering can occur, as well as nonuniformity of microstructure due to segregation in the compacts and grain growth.

U.S. Patent No. 3,970,136, granted July 20, 1976, to J. C. Cannell et al., describes a process for forming a metal matrix composite incorporating a fibrous reinforcement, e.g. silicon carbide or alumina whiskers, having a predetermined pattern of fiber orientation. The composite is made by placing parallel mats or felts of coplanar fibers in a mold with a reservoir of molten matrix metal, e.g., aluminum, between at least some of the mats, and applying pressure to force molten metal to penetrate the mats and surround the oriented fibers. Molten metal may be poured onto the stack of mats while being forced under pressure to flow between the mats. Loadings of up to about 50% by volume of reinforcing fibers in the composite have been reported.

The above-described infiltration process, in view of its dependence on outside pressure to force the molten matrix metal through the stack of fibrous mats, is subject to the vagaries of pressure-induced flow processes, i.e., possible non-uniformity of matrix formation, porosity, etc. Non-uniformity of properties is possible even though molten metal may be introduced at a multiplicity of sites within the fibrous array. Consequently, complicated mat/reservoir arrays and flow pathways need to be provided to achieve adequate and uniform penetration of the stack of fiber mats. Also, the aforesaid pressure-infiltration method allows for only a relatively low reinforcement to matrix volume fraction to be achieved because of the difficulty inherent in infiltrating a large mat volume. Still further, molds are required to contain the molten metal under pressure, which adds to the expense of the process. Finally, the aforesaid process, limited to infiltrating aligned particles or fibers, is not directed to formation of aluminum metal matrix composites reinforced with materials in the form of randomly oriented particles, whiskers or fibers.

In the fabrication of aluminum matrix-alumina filled composites, aluminum does not readily wet alumina, thereby making it difficult to form a coherent product. Various solutions to this problem have been suggested. One such approach is to coat the alumina with a metal (e.g., nickel or tungsten), which is then hot-pressed along with the aluminum. In another technique, the aluminum is alloyed with lithium, and the alumina may be coated with silica. However, these composites exhibit variations in properties, or the coatings can degrade the filler, or the matrix contains lithium which can affect the matrix properties.

U.S. Patent No. 4,232,091 to R. W. Grimshaw et al., overcomes certain difficulties in the art which are encountered in the production of aluminum matrix-alumina composites. This patent describes applying pressures of 75-375 kg/cm² to force molten aluminum (or molten aluminum alloy) into a fibrous or whisker mat of alumina which has been preheated to 700 to 1050°C. The maximum volume ratio of alumina to metal in the resulting solid casting was 0.25/1. Because of its dependency on outside force to accomplish infiltration, this process is subject to many of the same deficiencies as that of Cannell et al.

European Patent Application Publication No. 115,742 describes making aluminum-alumina composites, especially useful as electrolytic cell components, by filling the voids of a preformed alumina matrix with molten aluminum. The application emphasizes the non-wettability of alumina by aluminum, and therefore various techniques are employed to wet the alumina throughout the preform. For example, the alumina is coated with a wetting agent of a diboride of titanium, zirconium, hafnium, or niobium, or with a metal, i.e., lithium, magnesium, calcium, titanium, chromium, iron, cobalt, nickel, zirconium, or hafnium. Inert atmospheres, such as argon, are employed to facilitate wetting. This reference also shows applying pressure to cause molten aluminum to penetrate an uncoated matrix. In this aspect, infiltration is accomplished by evacuating the pores and then applying pressure to the molten aluminum in an inert atmosphere, e.g., argon. Alternatively, the preform can be infiltrated by vapor-phase aluminum deposition to wet the surface prior to filling the voids by infiltration with molten aluminum. To assure retention of the aluminum in the pores of the preform, heat treatment, e.g., at 1400 to 1800°C, in either a vacuum or in argon is required. Otherwise, either exposure of the pressure infiltrated material to gas or removal of the infiltration pressure will cause loss of aluminum from the body.

The use of wetting agents to effect infiltration of an alumina component in an electrolytic cell with molten metal is also shown in European Patent Application Publication No. 94353. This publication describes production of aluminum by electrowinning with a cell having a cathodic current feeder as a cell liner or substrate. In order to protect this substrate from molten cryolite, a thin coating of a mixture of a wetting agent and solubility suppressor is applied to the alumina substrate prior to start-up of the cell or while immersed in the molten aluminum produced by the electrolytic process. Wetting agents disclosed are titanium, zirconium, hafnium, silicon, magnesium, vanadium, chromium, niobium, or calcium, and titanium is stated as the preferred agent. Compounds of boron, carbon and nitrogen are described as being useful in suppressing the solubility of the wetting agents in molten aluminum. The reference, however, does not suggest the production of metal matrix composites, nor does it suggest the formation of such a composite in, for example, a nitrogen atmosphere.

In addition to application of pressure and wetting agents, it has been disclosed that an applied vacuum will aid the penetration of molten aluminum into a porous ceramic compact. For example, U.S. Patent No. 3,718,441, granted February 27, 1973, to R. L. Landingham, reports infiltration of a ceramic compact (e.g., boron carbide, alumina and beryllia) with either molten aluminum, beryllium, magnesium, titanium, vanadium, nickel or chromium under a vacuum of less than 10⁻⁶ torr. A vacuum of 10⁻² to 10⁻⁶ torr resulted in poor wetting of the ceramic by the molten metal to the extent that the metal did not flow freely into the ceramic void spaces. However, wetting was said to have improved when the vacuum was reduced to less than 10⁻⁶ torr.

U.S. Patent No. 3,864,154, granted February 4, 1975, to G. E. Gazza et al., also shows the use of vacuum to achieve infiltration. This patent describes loading a cold-pressed compact of AlB₁₂ powder onto a bed of cold-pressed aluminum powder. Additional aluminum was then positioned on top of the AlB₁₂ powder compact. The crucible, loaded with the AlB₁₂ compact "sandwiched" between the layers of aluminum powder, was placed in a vacuum furnace. The furnace was evacuated to approximately 10⁻⁵ torr to permit outgassing. The temperature was subsequently raised to 1100°C and maintained for a period of 3 hours. At these conditions, the molten aluminum penetrated the porous AlB₁₂ compact.

U.S. Patent No. 3,364,976, granted January 23, 1968 to John N. Reding et al., discloses the concept of creating a self-generated vacuum in a body to enhance penetration of a molten metal into the body. Specifically, it is disclosed that a body, e.g., a graphite mold, a steel mold, or a porous refractory material, is entirely submerged in a molten metal. In the case of a mold, the mold cavity, which is filled with a gas reactive with the metal, communicates with the externally located molten metal through at least one orifice in the mold. When the mold is immersed into the melt, filling of the cavity occurs as the self-generated vacuum is produced from the reaction between the gas in the cavity and the molten metal. Particularly, the vacuum is a result of the formation of a solid oxidized form of the metal. Thus, Reding et al. disclose that it is essential to induce a reaction between gas in the cavity and the molten metal. However, utilizing a mold to create a vacuum may be undesirable because of the inherent limitations associated with use of a mold. Molds must first be machined into a particular shape; then finished, machined to produce an acceptable casting surface on the mold; then assembled prior to their use; then disassembled after their use to remove the cast piece therefrom; and thereafter reclaim the mold, which most likely would include refinishing surfaces of the mold or discarding the mold if it is no longer acceptable for use. Machining of a mold into a complex shape can be very costly and time-consuming. Moreover, removal of a formed piece from a complex-shaped mold can also be difficult (i.e., cast pieces having a complex shape could be broken when removed from the mold). Still further, while there is a suggestion that a porous refractory material can be immersed directly in a molten metal without the need for a mold, the refractory material would have to be an integral piece because there is no provision for infiltrating a loose or separated porous material absent the use of a container mold (i.e., it is generally believed that the particulate material would typically disassociate or float apart when placed in a molten metal). Still further, if it was desired to infiltrate a particulate material or loosely formed preform, precautions should be taken so that the infiltrating metal does not displace at least portions of the particulate material or preform resulting in a non-homogeneous microstructure.

Accordingly, there has been a long felt need for a simple and reliable process to produce shaped metal matrix composites which does not rely upon the use of applied pressure or vacuum (whether externally applied or internally created), or damaging wetting agents to create a metal matrix embedding another material such as a ceramic material. Moreover, there has been a long felt need to minimize the amount of final machining operations needed to produce a metal matrix composite body. The present invention satisfies these needs by providing a spontaneous infiltration mechanism for infiltrating a filler material or preform (e.g., comprising a ceramic material, etc.), which can be formed into a preform, with molten matrix metal (e.g., aluminum) in the presence of an infiltrating atmosphere (e.g., nitrogen) under normal atmospheric pressures so long as an infiltration enhancer precursor and/or infiltration enhancer is present at least at some point during the process.

### Description of Commonly Owned U.S. Patents and Patent Applications

The subject matter of this application is related to that of several other copending and co-owned patent applications and issued Patents. Particularly, these other copending patent applications and issued Patents describe novel methods for making metal matrix composite materials (hereinafter sometimes referred to as "Commonly Owned Metal Matrix Patents and Patent Applications").

A novel method of making a metal matrix composite material is disclosed in Commonly Owned U.S. Patent Application Serial No. 049,171, filed May 13, 1987, in the names of White et al., and entitled "Metal Matrix Composites", now United States Patent No. 4,828,008, which issued on May 9, 1989, and which published in the EPO on November 17, 1988, as Publication No. 0291441. According to the method of this White et al. invention, a metal matrix composite is produced by infiltrating a permeable mass of filler material (e.g., a ceramic or a ceramic-coated material) with molten aluminum containing at least about 1 percent by weight magnesium, and preferably at least about 3 percent by weight magnesium. Infiltration occurs spontaneously without the application of external pressure or vacuum. A supply of the molten metal alloy is contacted with the mass of filler material at a temperature of at least about 675°C in the presence of a gas comprising from about 10 to 100 percent, and preferably at least about 50 percent, nitrogen by volume, and a remainder of the gas, if any, being a nonoxidizing gas, e.g., argon. Under these conditions, the molten aluminum alloy infiltrates the ceramic mass under normal atmospheric pressures to form an aluminum (or aluminum alloy) matrix composite. When the desired amount of filler material has been infiltrated with the molten aluminum alloy, the temperature is lowered to solidify the alloy, thereby forming a solid metal matrix structure that embeds the reinforcing filler material. Usually, and preferably, the supply of molten alloy delivered will be sufficient to permit the infiltration to proceed essentially to the boundaries of the mass of filler material. The amount of filler material in the aluminum matrix composites produced according to the White et al. invention may be exceedingly high. In this respect, filler to alloy volumetric ratios of greater than 1:1 may be achieved.

Under the process conditions in the aforesaid White et al. invention, aluminum nitride can form as a discontinuous phase dispersed throughout the aluminum matrix. The amount of nitride in the aluminum matrix may vary depending on such factors as temperature, alloy composition, gas composition and filler material. Thus, by controlling one or more such factors in the system, it is possible to tailor certain properties of the composite. For some end use applications, however, it may be desirable that the composite contain little or substantially no aluminum nitride.

It has been observed that higher temperatures favor infiltration but render the process more conducive to nitride formation. The White et al. invention allows the choice of a balance between infiltration kinetics and nitride formation.

An example of suitable barrier means for use with metal matrix composite formation is described in Commonly Owned U.S. Patent No. 4,935,055, which issued on June 19, 1990, from U.S. Patent Application Serial No. 07/141,642, filed January 7, 1988, in the names of Michael K. Aghajanian et al., and entitled "Method of Making Metal Matrix Composite with the Use of a Barrier", and which published in the EPO on July 12, 1989, as Publication No. 0323945. According to the method of this Aghajanian et al. invention, a barrier means (e.g., particulate titanium diboride or a graphite material such as a flexible graphite foil product sold by Union Carbide under the trade name GRAFOIL®) is disposed on a defined surface boundary of a filler material and matrix alloy infiltrates up to the boundary defined by the barrier means. The barrier means is used to inhibit, prevent, or terminate infiltration of the molten alloy, thereby providing net, or near net, shapes in the resultant metal matrix composite. Accordingly, the formed metal matrix composite bodies have an outer shape which substantially corresponds to the inner shape of the barrier means.

The method of U.S. Patent No. 4,828,008 was improved upon by Commonly Owned and Copending U.S. Patent Application Serial No. 07/517,541, filed April 24, 1990, which is a Continuation of U.S. Patent Application Serial No. 07/168,284, filed March 15, 1988, in the names of Michael K. Aghajanian and Marc S. Newkirk and entitled "Metal Matrix Composites and Techniques for Making the Same", and which published in the EPO on September 20, 1989, as Publication No. 0333629. In accordance with the methods disclosed in these U.S. Patent Applications, a matrix metal alloy is present as a first source of metal and as a reservoir of matrix metal alloy which communicates with the first source of molten metal due to, for example, gravity flow. Particularly, under the conditions described in this patent application, the first source of molten matrix alloy begins to infiltrate the mass of filler material under normal atmospheric pressures and thus begins the formation of a metal matrix composite. The first source of molten matrix metal alloy is consumed during its infiltration into the mass of filler material and, if desired, can be replenished, preferably by a continuous means, from the reservoir of molten matrix metal as the spontaneous infiltration continues. When a desired amount of permeable filler has been spontaneously infiltrated by the molten matrix alloy, the temperature is lowered to solidify the alloy, thereby forming a solid metal matrix structure that embeds the reinforcing filler material. It should be understood that the use of a reservoir of metal is simply one embodiment of the invention described in this patent application and it is not necessary to combine the reservoir embodiment with each of the alternate embodiments of the invention disclosed therein, some of which could also be beneficial to use in combination with the present invention.

The reservoir of metal can be present in an amount such that it provides for a sufficient amount of metal to infiltrate the permeable mass of filler material to a predetermined extent. Alternatively, an optional barrier means can contact the permeable mass of filler on at least one side thereof to define a surface boundary.

Moreover, while the supply of molten matrix alloy delivered should be at least sufficient to permit spontaneous infiltration to proceed essentially to the boundaries (e.g., barriers) of the permeable mass of filler material, the amount of alloy present in the reservoir could exceed such sufficient amount so that not only will there be a sufficient amount of alloy for complete infiltration, but excess molten metal alloy could remain and be attached to the metal matrix composite body. Thus, when excess molten alloy is present, the resulting body will be a complex composite body (e.g., a macrocomposite), wherein an infiltrated ceramic body having a metal matrix therein will be directly bonded to excess metal remaining in the reservoir.

Further improvements in metal matrix technology can be found in commonly owned and copending U.S. Patent Application Serial No. 07/521,043, filed May 9, 1990, which is a Continuation-in-Part application of U.S. Patent Application Serial No. 07/484,753, filed February 23, 1990, which is a Continuation-in-Part application of U.S. Patent Application Serial No. 07/432,661, filed November 7, 1989, which is a Continuation-in-Part application of U.S. Patent Application Serial No. 07/416,327 (now abandoned), filed October 6, 1989, which is a continuation-in-part application of U.S. Patent Application Serial No. 07/349,590 (now abandoned), filed May 9, 1989, which in turn is a continuation-in-part application of U.S. Patent Application Serial No. 07/269,311 (now abandoned), filed November 10, 1988, all of which were filed in the names of Michael K. Aghajanian et al. and all of which are entitled "A Method of Forming Metal Matrix Composite Bodies By A Spontaneous Infiltration Process, and Products Produced Therefrom" (an EPO application corresponding to U.S. Patent Application Serial No. 07416,327 was published in the EPO on June 27, 1990, as European Publication No. 0 375 558). According to these Aghajanian et al. applications, spontaneous infiltration of a matrix metal into a permeable mass of filler material or preform is achieved by use of an infiltration enhancer and/or an infiltration enhancer precursor and/or an infiltrating atmosphere which are in communication with the filler material or preform, at least at some point during the process, which permits molten matrix metal to spontaneously infiltrate the filler material or preform. Aghajanian et al. disclose a number of matrix metal/infiltration enhancer precursor/infiltrating atmosphere systems which exhibit spontaneous infiltration. Specifically, Aghajanian et al. disclose that spontaneous infiltration behavior has been observed in the aluminum/magnesium/nitrogen system; the aluminum/strontium/nitrogen system; the aluminum/zinc/oxygen system; and the aluminum/calcium/nitrogen system. However, it is clear from the disclosure set forth in the Aghajanian et al. applications that the spontaneous infiltration behavior should occur in other matrix metal/infiltration enhancer precursor/infiltrating atmosphere systems.

Each of the above-discussed Commonly Owned Metal Matrix Patents and Patent Applications describes methods for the production of metal matrix composite bodies and novel metal matrix composite bodies which are produced therefrom. The entire disclosures of all of the foregoing Commonly Owned Metal Matrix Patents and Patent Applications are expressly incorporated herein by reference.

### Summary of the Invention

A metal matrix composite body is produced by spontaneously infiltrating a permeable mass of filler material or a preform with a molten matrix metal. Specifically, an infiltration enhancer and/or an infiltration enhancer precursor and an infiltrating atmosphere are in communication with the filler material or preform, at least at some point during the process, which permits molten matrix metal to spontaneously infiltrate the filler material or preform. According to the present invention, the molten matrix metal and the filler are provided in a unique manner which enhances the spontaneous infiltration process.

In a first preferred embodiment, matrix metal is contacted with the preform or filler material only in a molten state. Specifically, by spacing a solid ingot of matrix metal apart from a filler material or preform (e.g., suspended above a filler material or preform or positioned above a filler material or preform so that the matrix metal does not contact directly the filler material or preform) and heating said ingot of matrix metal to a temperature at which it becomes molten, the molten matrix metal can be induced to flow and contact at least one surface of said preform or filler material containing an infiltration enhancer, at which point infiltration commences. By permitting the matrix metal to contact the filler material or preform only in a molten state, any undesirable surface layers which may form on the matrix metal are prohibited from forming, thereby enhancing the spontaneous infiltration process. The means for initially separating the matrix metal ingot from the filler material or preform can be any simple or complex means.

In a second preferred embodiment, matrix metal also is contacted with the preform or filler material only in a molten state, however, a different means for providing molten matrix metal is utilized. Specifically, solid ingots of matrix metal are heated in an appropriate refractory vessel apart from the preform or filler material. The refractory vessel may be heated adjacent to the preform or filler material or may be completely separate from the preform or filler material. Thus, a reservoir of molten matrix metal is formed. The reservoir of matrix metal is then permitted to communicate with the filler material or preform. Specifically, the reservoir may supply only that amount of matrix metal needed for substantially complete infiltration of the preform or filler material or, if needed, the reservoir can provide matrix metal in excess of that which is needed to achieve substantially complete infiltration.

In each of the above embodiments, the contacting of matrix metal only in its molten state with the preform or filler material assures a clean interface between the matrix metal and the preform or filler material, which assists the infiltration process. For example, the possibility of the formation of a protective layer (e.g., an oxide or a nitride) which detrimentally affects infiltration is minimized. Moreover, any thermal stresses which may be generated due to contacting a solid ingot of matrix metal with a filler material or preform are ameliorated by contacting the matrix metal with the preform or filler material only in its molten state (e.g., cracking of the preform or the filler material is ameliorated).

In each of the above-discussed preferred embodiments, particularly with regard to the formation of metal matrix composite bodies by a spontaneous infiltration technique, a precursor to an infiltration enhancer is supplied to at least the filler material or preform, prior to infiltration. The supplied infiltration enhancer precursor may thereafter react with at least one of the filler material or preform and the infiltrating atmosphere to produce infiltration enhancer in at least a portion of, or on, the filler material or preform. Ultimately, at least during the spontaneous infiltration, infiltration enhancer is in contact with at least a portion of the filler material or preform.

In another preferred embodiment of the invention, again with regard to spontaneous infiltration, rather than supplying an infiltration enhancer precursor, an infiltration enhancer may be supplied directly to the preform or filler material. Ultimately, at least during the spontaneous infiltration, the infiltration enhancer should be in contact with at least a portion of the filler material or preform.

This application discusses various examples of matrix metals, which at some point during the formation of a metal matrix composite, are contacted with an infiltration enhancer precursor, in the presence of an infiltrating atmosphere. Thus, various references will be made to particular matrix metal/infiltration enhancer precursor/infiltrating atmosphere systems which exhibit spontaneous infiltration. However, it is conceivable that many other matrix metal/infiltration enhancer precursor/infiltrating atmosphere systems other than those discussed in this application may behave in a manner similar to the systems discuss above herein. Specifically, spontaneous infiltration behavior has been observed in the aluminum/magnesium/nitrogen system; the aluminum/strontium/nitrogen system; the aluminum/zinc/oxygen system; and the aluminum/calcium/nitrogen system. Accordingly, even though this application discusses only those systems referred to above herein (with particular emphasis being placed upon the aluminum/magnesium/nitrogen system), it should be understood that other matrix metal/infiltration enhancer precursor/infiltrating atmosphere systems may behave in a similar manner.

In a preferred embodiment for achieving spontaneous infiltration into a permeable mass of filler material or a preform, molten matrix metal is contacted with the preform or filler material, and an infiltration enhancer precursor is provided to the filler material or preform prior to the molten matrix metal contacting the filler material or preform. Moreover, the infiltration enhancer precursor provided within the filler material or preform reacts with, for example, the filler material or preform and/or an infiltrating atmosphere to form an infiltration enhancer within the filler material or preform prior to the molten matrix metal contacting the filler material or preform. In another preferred embodiment, the molten matrix metal and/or preform or filler material communicate with an infiltrating atmosphere for at least a portion of the process. In another preferred embodiment, the matrix metal and/or preform or filler material communicate with an infiltrating atmosphere for substantially all of the process. The preform or filler material will be spontaneously infiltrated by molten matrix metal, and the extent or rate of spontaneous infiltration and formation of metal matrix composite will vary with a given set of processing conditions including, for example, the concentration and/or location of infiltration enhancer precursor provided to the system (e.g., in the molten matrix alloy and/or in the filler material or preform and/or in the infiltrating atmosphere), the size and/or composition of the filler material, the size and/or composition of particles in the preform, the available porosity for infiltration into the preform or filler material, the time permitted for infiltration to occur, and/or the temperature at which infiltration occurs. Spontaneous infiltration typically occurs to an extent sufficient to embed substantially completely the preform or filler material.

Moreover, by varying the composition of the matrix metal, filler material, etc. and/or the processing conditions, the physical and mechanical properties of the formed metal matrix composite bodies may be engineered to any particular application or need. Further, by subjecting a formed metal matrix composite body to a post treatment process (e.g., directional solidification, heat treatment, etc.) the mechanical and/or physical properties may be further engineered to meet any particular application or need. Still further, by controlling the processing conditions during the formation of a metal matrix composite the nitrogen content of the formed metal matrix composite may be tailored to meet a wide range of industrial applications.

Moreover, by controlling the composition and/or size (e.g., particle diameter) and/or geometry of the filler material or the material comprising the preform, the physical and/or mechanical properties of the formed metal matrix composite can be controlled or engineered to meet any number of industrial needs. For example, it has been discovered that wear resistance of the metal matrix composite can be increased by increasing the size of the filler material (e.g., increasing the average diameter of the filler material particles), given that the wear resistance of filler material is higher than that of the matrix metal. However, strength and/or toughness may tend to increase with decreasing filler size. Further, the thermal expansion coefficient of the metal matrix composite may decrease with increasing filler loading, given that the coefficient of thermal expansion of the filler is lower than the coefficient of thermal expansion of the matrix metal. Still further, the mechanical and/or physical properties (e.g., density, elastic and/or specific modulus, strength and/or specific strength, etc.) of a formed metal matrix composite body may be tailored depending on the loading of the filler material in the loose mass or in the preform. For example, by providing a loose mass or preform comprising a mixture of filler particles of varying sizes and/or shapes, wherein the density of the filler is greater than that of the matrix metal, a higher filler loading, due to enhanced packing of the filler material, may be achieved, thereby resulting in a metal matrix composite body with an increased density. By utilizing the teachings of the present invention, the volume percent of filler material or preform which can be infiltrated can vary over a wide range. The lower volume percent of filler that can be infiltrated is limited primarily by the ability to form a porous filler material or preform, (e.g., about 10 volume percent); whereas the higher volume percent of filler or preform that can be infiltrated is limited primarily by the ability to form a dense filler material or preform with at least some interconnected porosity (e.g., about 95 volume percent). Accordingly, by practicing any of the above teachings, alone or in combination, a metal matrix composite can be engineered to contain a desired combination of properties.

### Definitions

"Aluminum", as used herein, means and includes essentially pure metal (e.g., a relatively pure, commercially available unalloyed aluminum) or other grades of metal and metal alloys such as the commercially available metals having impurities and/or alloying constituents such as iron, silicon, copper, magnesium, manganese, chromium, zinc, etc., therein. An aluminum alloy for purposes of this definition is an alloy or intermetallic compound in which aluminum is the major constituent.

"Balance Non-Oxidizing Gas", as used herein, means that any gas present in addition to the primary gas comprising the infiltrating atmosphere, is either an inert gas or a reducing gas which is substantially non-reactive with the matrix metal under the process conditions. Any oxidizing gas which may be present as an impurity in the gas(es) used should be insufficient to oxidize the matrix metal to any substantial extent under the process conditions.

"Barrier" or "barrier means", as used herein, means any suitable means which interferes with, inhibits, prevents or terminates the migration, movement, or the like, of molten matrix metal beyond a surface boundary of a permeable mass of filler material or preform, where such surface boundary is defined by said barrier means. Suitable barrier means may be any such material, compound, element, composition, or the like, which, under the process conditions, maintains some integrity and is not substantially volatile (i.e., the barrier material does not volatilize to such an extent that it is rendered non-functional as a barrier).

Further, suitable "barrier means" include materials which are substantially non-wettable by the migrating molten matrix metal under the process conditions employed. A barrier of this type appears to exhibit substantially little or no affinity for the molten matrix metal, and movement beyond the defined surface boundary of the mass of filler material or preform is prevented or inhibited by the barrier means. The barrier reduces any final machining or grinding that may be required and defines at least a portion of the surface of the resulting metal matrix composite product. The barrier may in certain cases be permeable or porous, or rendered permeable by, for example, drilling holes or puncturing the barrier, to permit gas to contact the molten matrix metal, etc.

"Carcass" or "Carcass of Matrix Metal", as used herein, refers to any of the original body of matrix metal remaining which has not been consumed during formation of the metal matrix composite body, and typically, if allowed to cool, remains in at least partial contact with the metal matrix composite body which has been formed. It should be understood that the carcass may also include a second or foreign metal therein.

"Filler", as used herein, is intended to mean either single constituents or mixtures of constituents which are substantially non-reactive with and/or of limited solubility in the matrix metal and may be single or multi-phase. Fillers may be provided in a wide variety of forms and sizes, such as powders, flakes, platelets, microspheres, whiskers, bubbles, fibers, particulates, fiber mats, chopped fibers, spheres, pellets, tubules, refractory cloths, etc., and may be either dense or porous. "Filler" may also include ceramic fillers, such as alumina or silicon carbide as fibers, chopped fibers, particulates, whiskers, bubbles, spheres, fiber mats, or the like, and ceramic-coated fillers such as carbon fibers coated with alumina or silicon carbide to protect the carbon from attack, for example, by a molten aluminum matrix metal. Fillers may also include metals.

"Hot-Topping", as used herein, refers to the placement of a substance on one end (the "topping" end) of an at least partially formed metal matrix composite which reacts exothermically with at least one of the matrix metal and/or filler material and/or with another material supplied to the topping end. This exothermic reaction should provide sufficient heat to maintain the matrix metal at the topping end in a molten state while the balance of the matrix metal in the composite cools to solidification temperature.

"Infiltrating Atmosphere", as used herein, means that atmosphere which is present which interacts with the matrix metal and/or preform (or filler material) and/or infiltration enhancer precursor and/or infiltration enhancer and permits or enhances spontaneous infiltration of the matrix metal.

"Infiltration Enhancer", as used herein, means a material which promotes or assists in the spontaneous infiltration of a matrix metal into a filler material or preform. An infiltration enhancer may be formed from, for example, (1) a reaction of an infiltration enhancer precursor with an infiltrating atmosphere to form a gaseous species and/or (2) a reaction product of the infiltration enhancer precursor and the infiltrating atmosphere and/or (3) a reaction product of the infiltration enhancer precursor and the filler material or preform. Moreover, the infiltration enhancer may be supplied directly to at least one of the preform, and/or matrix metal, and/or infiltrating atmosphere and function in a substantially similar manner to an infiltration enhancer which has formed from a reaction between an infiltration enhancer precursor and another species. Ultimately, at least during the spontaneous infiltration, the infiltration enhancer should be located in at least a portion of the filler material or preform to achieve spontaneous infiltration, and the infiltration enhancer may be at least partially reducible by the matrix metal.

"Infiltration Enhancer Precursor" or "Precursor to the Infiltration Enhancer", as used herein, means a material which when used in combination with (1) the matrix metal, (2) the preform or filler material and/or (3) an infiltrating atmosphere forms an infiltration enhancer which induces or assists the matrix metal to spontaneously infiltrate the filler material or preform. Without wishing to be bound by any particular theory or explanation, it appears as though it may be necessary for the precursor to the infiltration enhancer to be capable of being positioned, located or transportable to a location which permits the infiltration enhancer precursor to interact with the infiltrating atmosphere and/or the preform or filler material and/or matrix metal. For example, in some matrix metal/infiltration enhancer precursor/infiltrating atmosphere systems, it is desirable for the infiltration enhancer precursor to volatilize at, near, or in some cases, even somewhat above the temperature at which the matrix metal becomes molten. Such volatilization may lead to: (1) a reaction of the infiltration enhancer precursor with the infiltrating atmosphere to form a gaseous species which enhances wetting of the filler material or preform by the matrix metal; and/or (2) a reaction of the infiltration enhancer precursor with the infiltrating atmosphere to form a solid, liquid or gaseous infiltration enhancer in at least a portion of the filler material or preform which enhances wetting; and/or (3) a reaction of the infiltration enhancer precursor within the filler material or preform which forms a solid, liquid or gaseous infiltration enhancer in at least a portion of the filler material or preform which enhances wetting.

"Matrix Metal" or "Matrix Metal Alloy", as used herein, means that metal which is utilized to form a metal matrix composite body (e.g., before infiltration) and/or that metal which is intermingled with a filler material to form a metal matrix composite body (e.g., after infiltration). When a specified metal is mentioned as the matrix metal, it should be understood that such matrix metal includes that metal as an essentially pure metal, a commercially available metal having impurities and/or alloying constituents therein, an intermetallic compound or an alloy in which that metal is the major or predominant constituent.

"Matrix Metal/Infiltration Enhancer Precursor/Infiltrating Atmosphere System" or "Spontaneous System", as used herein, refers to that combination of materials which exhibit spontaneous infiltration into a preform or filler material. It should be understood that whenever a "/" appears between an exemplary matrix metal, infiltration enhancer precursor and infiltrating atmosphere that the "/" is used to designate a system or combination of materials which, when combined in a particular manner, exhibits spontaneous infiltration into a preform or filler material.

"Metal Matrix Composite" or "MMC", as used herein, means a material comprising a two- or three-dimensionally interconnected alloy or matrix metal which has embedded a preform or filler material. The matrix metal may include various alloying elements to provide specifically desired mechanical and physical properties in the resulting composite.

A Metal "Different" from the Matrix Metal means a metal which does not contain, as a primary constituent, the same metal as the matrix metal (e.g., if the primary constituent of the matrix metal is aluminum, the "different" metal could have a primary constituent of, for example, nickel).

"Nonreactive Vessel for Housing Matrix Metal" means any vessel which can house or contain a filler material (or preform) and/or molten matrix metal under the process conditions and not react with the matrix and/or the infiltrating atmosphere and/or infiltration enhancer precursor and/or a filler material or preform in a manner which would be significantly detrimental to the spontaneous infiltration mechanism. The nonreactive vessel may be disposable and removable after the spontaneous infiltration of the molten matrix metal has been completed.

"Preform" or "Permeable Preform", as used herein, means a porous mass of filler or filler material which is manufactured with at least one surface boundary which essentially defines a boundary for infiltrating matrix metal, such mass retaining sufficient shape integrity and green strength to provide dimensional fidelity prior to being infiltrated by the matrix metal. The mass should be sufficiently porous to accommodate spontaneous infiltration of the matrix metal thereinto. A preform typically comprises a bonded array or arrangement of filler, either homogeneous or heterogeneous, and may be comprised of any suitable material (e.g., ceramic and/or metal particulates, powders, fibers, whiskers, etc., and any combination thereof). A preform may exist either singularly or as an assemblage.

"Reservoir", as used herein, means a separate body of matrix metal positioned relative to a mass of filler or a preform so that, when the metal is molten, it may flow to replenish, or in some cases to initially provide and subsequently replenish, that portion, segment or source of matrix metal which is in contact with the filler or preform.

"Spontaneous Infiltration", as used herein, means the infiltration of matrix metal into the permeable mass of filler or preform occurs without requirement for the application of pressure or vacuum (whether externally applied or internally created).

### Brief Description of Drawings

The following Figures are provided to assist in understanding the invention, but are not intended to limit the scope of the invention, wherein:
Figure 1 is a cross-sectional schematic of the lay-up used to form the metal matrix composite body of Example 1;
Figure 2 is a cross-sectional schematic corresponding to an example of a preferred embodiment of the present invention;
Figure 3a is a cross-sectional schematic view of a rotary kiln used to prepare a filler material according to the method of Example 2;
Figure 3b is a cross-sectional schematic view of a lay-up used to form a metal matrix composite body according to the method of Example 2;
Figure 3c is a photomicrograph taken at about 400X corresponding to the metal matrix composite body formed from the filler material of Sample D of Example 2;
Figure 3d is a photomicrograph taken at about 1000X of the metal matrix composite body formed from the filler material of Sample D in Example 2;
Figure 3e is a photomicrograph taken at about 400X of the metal matrix composite body formed from the filler material of Sample E in Example 2;
Figure 4 is a cross-sectional schematic view of a fluidized bed reactor used to prepare a filler material according to the method of Example 3;
Figure 5 is a cross-sectional schematic view of a lay-up used to form a metal matrix composite body according to the method of Example 4;
Figure 6 is a cross-sectional schematic view of the equipment used to form a metal matrix composite body according to the method of Example 5;
Figure 7 is a cross-sectional schematic view of the lay-up used to form a metal matrix composite body according to the method of Example 6;
Figure 8 is a cross-sectional schematic view of the lay-up used to form a metal matrix composite body according to the method of Example 7;

### Detailed Description of the Invention and Preferred Embodiments

The present invention relates to forming a metal matrix composite by spontaneously infiltrating a filler material or preform with molten matrix metal. Particularly, an infiltration enhancer and/or an infiltration enhancer precursor and an infiltrating atmosphere are in communication with the filler material or preform, at least at some point during the process, which permits molten matrix metal to spontaneously infiltrate the filler material or preform. The molten matrix metal and the filler are provided in a unique manner which enhances the spontaneous infiltration process.

In a first preferred embodiment, matrix metal is contacted with the preform or filler material only in a molten state. Specifically, by spacing a solid ingot of matrix metal apart from a filler material or preform (e.g., suspended above a filler material or preform or positioned above a filler material or preform so that the matrix metal does not contact directly the filler material or preform) and heating said ingot of matrix metal to a temperature at which it becomes molten, the molten matrix metal can be induced to flow and contact at least one surface of said preform or filler material, at which point spontaneous infiltration commences. By permitting the matrix metal to contact the filler material or preform only in a molten state, any undesirable surface layers which may form on the matrix metal are prohibited from forming, thereby enhancing the spontaneous infiltration process. The means for initially separating the matrix metal ingot from the filler material or preform can be any simple or complex means.

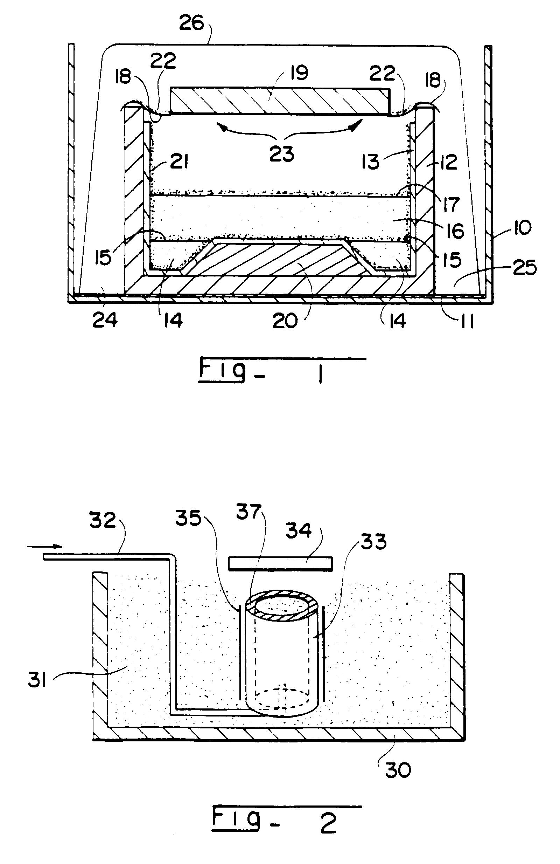

One example of a layup for carrying out this first preferred embodiment is described in detail in Example 1, herein, and is shown schematically in cross-section in Figure 1. Generally, a filler material or preform 16 may be placed within a refractory vessel 12, and a support means 18 for suspending a matrix metal above the filler material or preform is provided. Matrix metal 19 is positioned upon the support means 18 to suspend the matrix metal above the filler material or preform 16. Upon heating the layup in an infiltrating atmosphere to a temperature above the melting point of the matrix metal, the molten matrix metal flows and contacts at least one surface of the filler material or preform, at which point spontaneous infiltration commences.

Another example of a layup for carrying out this first preferred embodiment is shown schematically in cross-section in Figure 2. Generally, a preform 33, having a barrier 37 on a top surface of the preform 33, is at least partially surrounded with an expendable material 35 (e.g., polysyrene, styrofoam, wax, wood, etc.), which volatilizes under the process conditions. The preform 33 surrounded with the expendable material 35 is positioned within a bedding material 31 (which material is typically substantially non-wettable by the matrix metal) contained within a refractory vessel 30 and additional bedding material 31 is provided within the cavity in the preform 33. An infiltrating atmosphere can be provided to the layup, for example, by providing an environment comprising the infiltrating atmosphere to the entire layup, or, alternatively, by providing a localized infiltrating atmosphere environment to the preform by using an infiltrating atmosphere feed tube 32, as shown in Figure 2. A matrix metal ingot 34 may then be placed onto the barrier 37, so that the matrix metal 34 does not contact directly the preform 33. Upon heating to process conditions, the expendable material 35 volatilizes, leaving channels or openings adjacent to the preform 33. Under the process conditions, the molten matrix metal flows into the openings or channels left by the expendable material and contacts at least one surface of the preform, at which point spontaneous infiltration commences.

In a second preferred embodiment, matrix metal also is contacted with the preform or filler material only in a molten state, however, a different means for providing molten matrix metal is utilized. Specifically, solid ingots of matrix metal are heated in an appropriate refractory vessel apart from the preform or filler material. The refractory vessel may be heated adjacent to the preform or filler material or may be completely separate from the preform or filler material. Thus, a reservoir of molten matrix metal is formed. The reservoir of matrix metal is then permitted to communicate with the filler material or preform. Specifically, the reservoir may supply only that amount of matrix metal needed for substantially complete infiltration of the preform or filler material or, if needed, the reservoir can provide matrix metal in excess of that which is needed to achieve substantially complete infiltration.

One example of a layup for carrying out this second preferred embodiment is described in detail in Example 6, herein, and is shown schematically in cross-section in Figure 7. Generally, a filler material or preform 78 is placed within a refractory container 72. A second refractory container 75 having at least one opening 76 for communicating with the exterior of the second refractory container 75 is also placed within refractory container 72. A matrix metal ingot 79 is then placed within the second refractory container 75, and the layup is heated in the presence of an infiltrating atmosphere to a temperature above the melting point of the matrix metal to render the matrix metal molten. The molten matrix metal flows through the at least one opening 76 in the second refractory container 75 and contacts at least one surface of the preform 78, at which point spontaneous infiltration commences.

In each of the above embodiments, particularly with regard to a spontaneous infiltration technique for forming metal matrix composites, the contacting of matrix metal only in its molten state with the preform or filler material assures a clean interface between the matrix metal and the preform or filler material, which assists the spontaneous infiltration process. For example, the possibility of the formation of a protective layer which detrimentally affects spontaneous infiltration (e.g., an oxide or a nitride) is minimized. Moreover, any thermal stresses which may be generated due to contacting a solid ingot of matrix metal with a filler material or preform are ameliorated by contacting the matrix metal with the preform or filler material only in its molten state (e.g., cracking of the preform or the filler material is ameliorated).

In regard to each of the above-discussed embodiments, again with regard to spontaneous infiltration, and without wishing to be bound by any particular theory or explanation, when an infiltration enhancer precursor is utilized in combination with a filler material or preform and an infiltrating atmosphere, the infiltration enhancer precursor reacts to form an infiltration enhancer which induces or assists molten matrix metal to spontaneously infiltrate a filler material or preform. Moreover, when utilizing such an infiltration enhancer precursor, it appears as though it may be necessary for the precursor to the infiltration enhancer to be capable of being positioned, located or transportable to a location which permits the infiltration enhancer precursor to interact with the infiltrating atmosphere, and the preform or filler material, prior to infiltration. For example, in some matrix metal/infiltration enhancer precursor/infiltrating atmosphere systems, it is desirable for the infiltration enhancer precursor to volatilize at, near, or in some cases, even somewhat above the temperature at which the matrix metal becomes molten. Such volatilization may lead to: (1) a reaction of the infiltration enhancer precursor with the infiltrating atmosphere to form a gaseous species which enhances wetting of the filler material or preform by the matrix metal; and/or (2) a reaction of the infiltration enhancer precursor with the infiltrating atmosphere to form a solid, liquid or gaseous infiltration enhancer in at least a portion of the filler material or preform which enhances wetting; and/or (3) a reaction of the infiltration enhancer precursor within the filler material or preform which forms a solid, liquid or gaseous infiltration enhancer in at least a portion of the filler material or preform which enhances wetting.

Thus, for example, if an infiltration enhancer precursor was included or combined with, at least at some point during the process, molten matrix metal, it is poss ible that the infiltration enhancer precursor could volatilize from the molten matrix metal and react with at least one of the filler material or preform and/or the infiltrating atmosphere. Such reaction could result in the formation of an infiltration enhancer which may be a solid species, if such solid species was stable at the infiltration temperature, said solid species being capable of being deposited on at least a portion of the filler material or preform as, for example, a coating. Moreover, it is conceivable that such solid species could be present as a discernible solid within at least a portion of the preform or filler material. If such a solid species was formed, molten matrix metal may have a tendency to react with the solid species (e.g., the molten matrix metal may reduce the formed solid species) such that infiltration enhancer precursor may become associated with (e.g., dissolved in or alloyed with) the molten matrix metal. Accordingly, additional infiltration enhancer precursor may then be available to volatilize and react with another species (e.g., the filler material or preform and/or infiltrating atmosphere) and again form a similar solid species. It is conceivable that a continuous process of conversion of infiltration enhancer precursor to infiltration enhancer followed by a reduction reaction of the infiltration enhancer with molten matrix metal to again form infiltration enhancer precursor, and so on, could occur, until the result achieved is a spontaneously infiltrated metal matrix composite.

In order to effect spontaneous infiltration of the matrix metal into the filler material or preform, an infiltration enhancer should be provided to the spontaneous system. An infiltration enhancer could be formed from an infiltration enhancer precursor which could be provided (1) in the matrix metal; and/or (2) in the filler material or preform; and/or (3) from the infiltrating atmosphere; and/or (4) from an external source into the spontaneous system. Moreover, rather than supplying an infiltration enhancer precursor, an infiltration enhancer may be supplied directly to at least one of the filler material or preform, and/or matrix metal, and/or infiltrating atmosphere. Ultimately, at least during the spontaneous infiltration, the infiltration enhancer should be located in at least a portion of the filler material or preform.

According to the present invention, the infiltration enhancer precursor is at least partially reacted with the infiltrating atmosphere such that the infiltration enhancer is formed in at least a portion of the filler material or preform prior to contacting the filler material or preform with the matrix metal (e.g., if magnesium was the infiltration enhancer precursor and nitrogen was the infiltrating atmosphere, the infiltration enhancer could be magnesium nitride which would be located in at least a portion of the preform or filler material).

An example of a matrix metal/infiltration enhancer precursor/infiltrating atmosphere system is the aluminum/magnesium/nitrogen system. Specifically, an aluminum matrix metal can be contained within a suitable refractory vessel which, under the process conditions, does not adversely react with the aluminum matrix metal and/or the filler material when the aluminum is made molten. A filler material or preform can thereafter be contacted with molten aluminum matrix metal and spontaneously infiltrated.

Moreover, rather than supplying an infiltration enhancer precursor, an infiltration enhancer may be supplied directly to at least one of the preform or filler material prior to infiltration. Ultimately, at least during the spontaneous infiltration, the infiltration enhancer should be located in at least a portion of the filler material or preform.

In the present invention, an infiltration enhancer is supplied to the filler material or preform prior to contacting the filler material or preform with molten matrix metal. Particularly, an infiltration enhancer is formed within at least a portion of a filler material or preform in a prior step, for example, either within a refractory vessel prior to the spontaneous infiltration or, alternatively, in a separate vessel, such formation of infiltration enhancer occurring in or from any of a liquid, solid or gaseous phase. For example, by providing an infiltration enhancer precursor and, for example, an infiltrating atmosphere, within at least a portion of the filler material or preform within the refractory vessel to be used for spontaneous infiltration, the infiltration enhancer precursor can react with an infiltrating atmosphere to form infiltration enhancer within at least a portion of the filler material or preform prior to the spontaneous infiltration. Moreover, the filler material or preform may be placed within an apparatus, such as a rotary kiln or a fluidized bed, to form an infiltration enhancer precursor within at least a portion of the filler material or preform. For example, a filler material may be placed within a rotary kiln and an infiltration enhancer precursor may be provided to at least a portion of the filler material in any of a liquid, solid or gaseous state. An infiltrating atmosphere can then be provided to at least a portion of the rotary kiln to react at least partially with the infiltration enhancer precursor to form an infiltration enhancer in at least a portion of the filler material. Moreover, in another example, a filler material may be placed within a fluidized bed and an infiltration enhancer precursor may be provided to at least a portion of the filler material in any of a liquid, solid or gaseous state. An infiltrating atmosphere is then provided to at least a portion of the fluidized bed to react at least partially with the infiltration enhancer precursor to form an infiltration enhancer in at least a portion of the filler material. In another example, a preform may be placed within a fluidized bed comprising an infiltration enhancer precursor, and an infiltrating atmosphere may be provided to at least a portion of the fluidized bed, thereby permitting formation of an infiltration enhancer in at least a portion of the preform. Irrespective of the method of providing an infiltration enhancer within at least a portion of a filler material or preform, by providing an infiltration enhancer directly to the filler material or preform, it may be possible to enhance the formation of metal matrix composite bodies by spontaneous infiltration (e.g., by reducing infiltration times, controlling nitridation of the matrix metal, enhancing shape fidelity of the final metal matrix composite body, etc.).

Under the conditions employed in the method of the present invention, in the case of an aluminum/magnesium/nitrogen spontaneous infiltration system, the preform or filler material should be sufficiently permeable to permit the nitrogen-containing gas to penetrate or permeate the filler material or preform at some point during the process and/or contact the molten matrix metal. Moreover, the permeable filler material or preform can accommodate infiltration of the molten matrix metal, thereby causing the nitrogen-permeated preform to be infiltrated spontaneously with molten matrix metal to form a metal matrix composite body and/or cause the nitrogen to react with an infiltration enhancer precursor to form infiltration enhancer in the filler material or preform and thereby result in spontaneous infiltration. The extent of spontaneous infiltration and formation of the metal matrix composite will vary with a given set of process conditions, including magnesium content of the aluminum alloy, magnesium content of the preform or filler material, amount of magnesium nitride in the preform or filler material, the presence of additional alloying elements (e.g., silicon, iron, copper, manganese, chromium, zinc, and the like), average size of the filler material (e.g., particle diameter) comprising the preform or the filler material, surface condition and type of filler material or preform, nitrogen concentration of the infiltrating atmosphere, time permitted for infiltration and temperature at which infiltration occurs. For example, for infiltration of the molten aluminum matrix metal to occur spontaneously, the aluminum can be alloyed with at least about 1 percent by weight, and preferably at least about 3 percent by weight, magnesium (which functions as the infiltration enhancer precursor), based on alloy weight. Auxiliary alloying elements, as discussed above, may also be included in the matrix metal to tailor specific properties thereof. Additionally, the auxiliary alloying elements may affect the minimum amount of magnesium required in the matrix aluminum metal to result in spontaneous infiltration of the filler material or preform. Loss of magnesium from the spontaneous system due to, for example, volatilization should not occur to such an extent that no magnesium was present to form infiltration enhancer. Thus, it is desirable to utilize a sufficient amount of initial alloying elements to assure that spontaneous infiltration will not be adversely affected by volatilization. Still further, the presence of magnesium in both of the preform (or filler material) and matrix metal or the preform (or filler material) alone may result in a reduction in required amount of magnesium to achieve spontaneous infiltration (discussed in greater detail later herein).

The volume percent of nitrogen in the infiltrating atmosphere also affects formation rates of the metal matrix composite body. Specifically, if less than about 10 volume percent of nitrogen is present in the atmosphere, very slow or little spontaneous infiltration will occur. It has been discovered that it is preferable for at least about 50 volume percent of nitrogen to be present in the atmosphere, thereby resulting in, for example, shorter infiltration times due to a much more rapid rate of infiltration. The infiltrating atmosphere (e.g., a nitrogen-containing gas) can be supplied directly to the filler material or preform and/or matrix metal, or it may be produced or result from a decomposition of a material.

The minimum magnesium content required for the molten matrix metal to infiltrate a filler material or preform depends on one or more variables such as the processing temperature, time, the presence of auxiliary alloying elements such as silicon or zinc, the nature of the filler material, the location of the magnesium in one or more components of the spontaneous system, the nitrogen content of the atmosphere, and the rate at which the nitrogen atmosphere flows. Lower temperatures or shorter heating times can be used to obtain complete infiltration as the magnesium content of the alloy and/or preform is increased. Also, for a given magnesium content, the addition of certain auxiliary alloying elements such as zinc permits the use of lower temperatures. For example, a magnesium content of the matrix metal at the lower end of the operable range, e.g., from about 1 to 3 weight percent, may be used in conjunction with at least one of the following: an above-minimum processing temperature, a high nitrogen concentration, or one or more auxiliary alloying elements. When no magnesium is added to the preform, alloys containing from about 3 to 5 weight percent magnesium are preferred on the basis of their general utility over a wide variety of process conditions, with at least about 5 percent being preferred when lower temperatures and shorter times are employed. Magnesium contents in excess of about 10 percent by weight of the aluminum alloy may be employed to moderate the temperature conditions required for infiltration. The magnesium content may be reduced when used in conjunction with an auxiliary alloying element, but these elements serve an auxiliary function only and are used together with at least the above-specified minimum amount of magnesium. For example, there was substantially no infiltration of nominally pure aluminum alloyed only with 10 percent silicon at 1000°C into a bedding of 500 mesh, 39 Crystolon (99 percent pure silicon carbide from Norton Co.). However, in the presence of magnesium, silicon has been found to promote the infiltration process. As a further example, the amount of magnesium varies if it is supplied exclusively to the preform or filler material. It has been discovered that spontaneous infiltration will occur with a lesser weight percent of magnesium supplied to the spontaneous system when at least some of the total amount of magnesium supplied is placed in the preform or filler material. It may be desirable for a lesser amount of magnesium to be provided in order to prevent the formation of undesirable intermetallics in the metal matrix composite body. In the case of a silicon carbide preform, it has been discovered that when the preform is contacted with an aluminum matrix metal, the preform containing at least about 1% by weight magnesium and being in the presence of a substantially pure nitrogen atmosphere, the matrix metal spontaneously infiltrates the preform. In the case of an alumina preform, the amount of magnesium required to achieve acceptable spontaneous infiltration is slightly higher. Specifically, it has been found that when an alumina preform, when contacted with a similar aluminum matrix metal, at about the same temperature as the aluminum that infiltrated into the silicon carbide preform, and in the presence of the same nitrogen atmosphere, at least about 3% by weight magnesium may be required to achieve similar spontaneous infiltration to that achieved in the silicon carbide preform discussed immediately above.

It is also noted that it is possible to supply to the spontaneous system infiltration enhancer precursor and/or infiltration enhancer on a surface of the alloy and/or on a surface of the preform or filler material and/or within the preform or filler material prior to infiltrating the matrix metal into the filler material or preform (i.e., it may not be necessary for the supplied infiltration enhancer or infiltration enhancer precursor to be alloyed with the matrix metal, but rather, simply supplied to the spontaneous system). For example, in the aluminum/magnesium/nitrogen system, if the magnesium was applied to a surface of the matrix metal it may be preferred that the surface should be the surface which is closest to, or preferably in contact with, the permeable mass of filler material or vice versa; or such magnesium could be mixed into at least a portion of the preform or filler material. Still further, it is possible that some combination of surface application, alloying and placement of magnesium into at least a portion of the preform could be used. Such combination of applying infiltration enhancer(s) and/or infiltration enhancer precursor(s) could result in a decrease in the total weight percent of magnesium needed to promote infiltration of the matrix aluminum metal into the preform, as well as achieving lower temperatures at which infiltration can occur. Moreover, the amount of undesirable intermetallics formed due to the presence of magnesium could also be minimized.

The use of one or more auxiliary alloying elements and the concentration of nitrogen in the surrounding gas also affects the extent of nitriding of the matrix metal at a given temperature. For example, auxiliary alloying elements such as zinc or iron included in the alloy, or placed on a surface of the alloy, may be used to reduce the infiltration temperature and thereby decrease the amount of nitride formation, whereas increasing the concentration of nitrogen in the gas may be used to promote nitride formation.

The concentration of magnesium in the alloy, and/or placed onto a surface of the alloy, and/or combined in the filler or preform material, also tends to affect the extent of infiltration at a given temperature. Consequently, in some cases where little or no magnesium is contacted directly with the preform or filler material, it may be preferred that at least about three weight percent magnesium be included in the alloy. Alloy contents of less than this amount, such as one weight percent magnesium, may require higher process temperatures or an auxiliary alloying element for infiltration. The temperature required to effect the spontaneous infiltration process of this invention may be lower: (1) when the magnesium content of the alloy alone is increased, e.g., to at least about 5 weight percent; and/or (2) when alloying constituents are mixed with the permeable mass of filler material or preform; and/or (3) when another element such as zinc or iron is present in the aluminum alloy. The temperature also may vary with different filler materials. In general, in the aluminum/magnesium/nitrogen system spontaneous and progressive infiltration will occur at a process temperature of at least about 675°C, and preferably a process temperature of at least about 750°C-800°C. Temperatures generally in excess of 1200°C do not appear to benefit the process, and a particularly useful temperature range has been found to be from about 675°C to about 1000°C. However, as a general rule, the spontaneous infiltration temperature is a temperature which is above the melting point of the matrix metal but below the volatilization temperature of the matrix metal. Moreover, the spontaneous infiltration temperature should be below the melting point of the filler material. Still further, as temperature is increased, the tendency to form a reaction product between the matrix metal and infiltrating atmosphere increases (e.g., in the case of aluminum matrix metal and a nitrogen infiltrating atmosphere, aluminum nitride may be formed). Such reaction product may be desirable or undesirable based upon the intended application of the metal matrix composite body. Additionally, electric resistance heating is typically used to achieve the infiltrating temperatures. However, any heating means which can cause the matrix metal to become molten and does not adversely affect spontaneous infiltration, is acceptable for use with the invention.

In the present method, for example, a permeable filler material or preform comes into contact with molten aluminum in the presence of, at least sometime during the process, a nitrogen-containing gas. The nitrogen-containing gas may be supplied by maintaining a continuous flow of gas into contact with at least one of the filler material or preform and/or molten aluminum matrix metal. Although the flow rate of the nitrogen-containing gas is not critical, it is preferred that the flow rate be sufficient to compensate for any nitrogen lost from the atmosphere due to any nitride formation, and also to prevent or inhibit the incursion of air which can have an oxidizing effect on the molten metal.

The method of forming a metal matrix composite is applicable to a wide variety of filler materials, and the choice of filler materials will depend on such factors as the matrix alloy, the process conditions, the reactivity of the molten matrix alloy with the filler material, and the properties sought for the final composite product. For example, when aluminum is the matrix metal, suitable filler materials include (a) oxides, e.g. alumina, magnesia, zirconia; (b) carbides, e.g. silicon carbide; (c) borides, e.g. aluminum dodecaboride, titanium diboride, and (d) nitrides, e.g. aluminum nitride, and (e) mixtures thereof. If there is a tendency for the filler material to react with the molten aluminum matrix metal, this might be accommodated by minimizing the infiltration time and temperature or by providing a non-reactive coating on the filler. The filler material may comprise a substrate, such as carbon or other non-ceramic material, bearing a ceramic coating to protect the substrate from attack or degradation. Suitable ceramic coatings include oxides, carbides, borides and nitrides. Ceramics which are preferred for use in the present method include alumina and silicon carbide in the form of particles, platelets, whiskers and fibers. The fibers can be discontinuous (in chopped form) or in the form of continuous filament, such as multifilament tows. Further, the filler material or preform may be homogeneous or heterogeneous.

It also has been discovered that certain filler materials exhibit enhanced infiltration relative to filler materials having a similar chemical composition. For example, crushed alumina bodies made by the method disclosed in U.S. Patent No. 4,713,360, entitled "Novel Ceramic Materials and Methods of Making Same", which issued on December 15, 1987, in the names of Marc S. Newkirk et al., exhibit desirable infiltration properties relative to commercially available alumina products. Moreover, crushed alumina bodies made by the method disclosed in Commonly Owned U.S. Patent No. 4,851,375, entitled "Methods of Making Composite Ceramic Articles Having Embedded Filler", which issued on July 25, 1989, in the names of Marc S. Newkirk et al., also exhibit desirable infiltration properties relative to commercially available alumina products. The subject matter of each of the issued Patent and Copending Patent Application is herein expressly incorporated by reference. Thus, it has been discovered that complete infiltration of a permeable mass of ceramic material can occur at lower infiltration temperatures and/or lower infiltration times by utilizing a crushed or comminuted body produced by the method of the aforementioned U.S. Patent and Patent Application.

The size, shape, chemistry and volume percent of the filler material (or preform) can be any that may be required to achieve the properties desired in the composite. Thus, the filler material may be in the form of particles, whiskers, platelets or fibers since infiltration is not restricted by the shape of the filler material. Other shapes such as spheres, tubules, pellets, refractory fiber cloth, and the like may be employed. In addition, the size of the filler material does not limit infiltration, although a higher temperature or longer time period may be needed for complete infiltration of a mass of smaller particles than for larger particles or vice-versa depending on the particular reaction conditions. Average particle diameters as small as a micron or less to about 1100 microns or more can be successfully utilized in the present invention, with a range of about 2 microns through about 1000 microns being preferred for a vast majority of commercial applications. Further, the mass of filler material (or preform) to be infiltrated should be permeable (i.e., contain at least some interconnected porosity to render it permeable to molten matrix metal and/or to the infiltrating atmosphere). Moreover, by controlling the size (e.g., particle diameter) and/or geometry and/or composition of the filler material or the material comprising the preform, the physical and mechanical properties of the formed metal matrix composite can be controlled or engineered to meet any number of industrial needs. For example, wear resistance of the metal matrix composite can be increased by increasing the size of the filler material (e.g., increasing the average diameter of the filler material particles) given that the filler material has a higher wear resistance than the matrix metal. However, strength and/or toughness may tend to increase with decreasing filler size. Further, the thermal expansion coefficient of the metal matrix composite may decrease with increasing filler loading, given that the coefficient of thermal expansion of the filler is lower than the coefficient of thermal expansion of the matrix metal. Still further, the mechanical and/or physical properties (e.g., density, coefficient of thermal expansion, elastic and/or specific modulus, strength and/or specific strength, etc.) of a formed metal matrix composite body may be tailored depending on the loading of the filler material in the loose mass or in the preform. For example, by providing a loose mass or preform comprising a mixture of filler particles of varying sizes and/or shapes, wherein the density of the filler is greater than that of the matrix metal, a higher filler loading, due to enhanced packing of the filler materials, may be achieved, thereby resulting in a metal matrix composite body with an increased density. By utilizing the teachings of the present invention, the volume percent of filler material or preform which can be infiltrated can vary over a wide range. The lower volume percent of filler that can be infiltrated is limited primarily by the ability to form a porous filler material or preform, (e.g., about 10 volume percent); whereas the higher volume percent of filler or preform that can be infiltrated is limited primarily by the ability to form a dense filler material or preform with at least some interconnected porosity (e.g., about 95 volume percent). Accordingly, by practicing any of the above teachings, alone or in combination, a metal matrix composite can be engineered to contain a desired combination of properties.

The method of forming metal matrix composites according to the present invention, not being dependent on the use of pressure to force or squeeze molten matrix metal into a preform or a mass of filler material, permits the production of substantially uniform metal matrix composites having a high volume fraction of filler material and low porosity. Higher volume fractions of filler material may be achieved by using a lower porosity initial mass of filler material. Higher volume fractions also may be achieved if the mass of filler is compacted or otherwise densified provided that the mass is not converted into either a compact with closed cell porosity or into a fully dense structure that would prevent infiltration by the molten alloy. Specifically, volume fractions on the order of about 60 to 80 volume percent can be achieved by methods such as vibrational packing, controlling particle size distribution, etc. However, alternative techniques can be utilized to achieve even higher volume fractions of filler. Volume fractions of filler on the order of 40 to 50 percent are preferred for thermo-forming in accordance with the present invention. At such volume fractions, the infiltrated composite maintains or substantially maintains its shape, thereby facilitating secondary processing. Higher or lower particle loadings or volume fractions could be used, however, depending on the desired final composite loading after thermo-forming. Moreover, methods for reducing particle loadings can be employed in connection with the thermo-forming processes of the present invention to achieve lower particle loadings.

It has been observed that for aluminum infiltration and matrix formation around a ceramic filler, wetting of the ceramic filler by the aluminum matrix metal may be an important part of the infiltration mechanism. Further, the wetting of the filler by molten matrix metal may permit a uniform dispersion of the filler throughout the formed metal matrix composite and improve the bonding of the filler to the matrix metal. Moreover, at low processing temperatures, a negligible or minimal amount of metal nitriding occurs resulting in a minimal discontinuous phase of aluminum nitride dispersed in the metal matrix. However, as the upper end of the temperature range is approached, nitridation of the metal is more likely to occur. Thus, the amount of the nitride phase in the metal matrix can be controlled by varying the processing temperature at which infiltration occurs. The specific process temperature at which nitride formation becomes more pronounced also varies with such factors as the matrix aluminum alloy used and its quantity relative to the volume of filler or preform, the filler material to be infiltrated, and the nitrogen concentration of the infiltrating atmosphere. For example, the extent of aluminum nitride formation at a given process temperature is believed to increase as the ability of the alloy to wet the filler decreases and as the nitrogen concentration of the atmosphere increases.

It is therefore possible to tailor the constituency of the metal matrix during formation of the composite to impart certain characteristics to the resulting product. For a given system, the process conditions can be selected to control the nitride formation. A composite product containing an aluminum nitride phase will exhibit certain properties which can be favorable to, or improve the performance of, the product. Further, the temperature range for spontaneous infiltration with an aluminum alloy may vary with the ceramic material used. In the case of alumina as the filler material, the temperature for infiltration should preferably not exceed about 1000°C if it is desired that the ductility of the matrix not be reduced by the significant formation of nitride. However, temperatures exceeding 1000°C may be employed if it is desired to produce a composite with a less ductile and stiffer matrix. To infiltrate silicon carbide, higher temperatures of about 1200°C may be employed since the aluminum alloy nitrides to a lesser extent, relative to the use of alumina as filler, when silicon carbide is employed as a filler material.

Further, the constituency of the matrix metal within the metal matrix composite and defects, for example, porosity, may be modified by controlling the cooling rate of the metal matrix composite. For example, the metal matrix composite may be directionally solidified by any number of techniques including: placing the container holding the metal matrix composite upon a chill plate; and/or selectively placing insulating materials about the container. Further, the constituency of the metal matrix may be modified after formation of the metal matrix composite. For example, exposure of the formed metal matrix composite to a heat treatment may improve the tensile strength of the metal matrix composite. (The standard test for tensile strength is ASTM-D3552-77 (reapproved 1982).)

For example, a desirable heat treatment for a metal matrix composite containing a 520.0 aluminum alloy as the matrix metal may comprise heating the metal matrix composite to an elevated temperature, for example, to about 430°C, which is maintained for an extended period (e.g., 18-20 hours). The metal matrix may then be quenched in boiling water at about 100°C for about 20 seconds (i.e., a T-4 heat treatment) which can temper or improve the ability of the composite to withstand tensile stresses.

Moreover, it is possible to use a reservoir of matrix metal to assure complete infiltration of the filler material and/or to supply a second metal which has a different composition from the first source of matrix metal. Specifically, in some cases it may be desirable to utilize a matrix metal in the reservoir which differs in composition from the first source of matrix metal. For example, if an aluminum alloy is used as the first source of matrix metal, then virtually any other metal or metal alloy which was molten at the processing temperature could be used as the reservoir metal. Molten metals frequently are very miscible with each other which would result in the reservoir metal mixing with the first source of matrix metal so long as an adequate amount of time is given for the mixing to occur. Thus, by using a reservoir metal which is different in composition from the first source of matrix metal, it is possible to tailor the properties of the metal matrix to meet various operating requirements and thus tailor the properties of the metal matrix composite.

A barrier means may also be utilized in combination with the present invention. Specifically, the barrier means for use with this invention may be any suitable means which interferes, inhibits, prevents or terminates the migration, movement, or the like, of molten matrix alloy (e.g., an aluminum alloy) beyond the defined surface boundary of the filler material. Suitable barrier means may be any material, compound, element, composition, or the like, which, under the process conditions of this invention, maintains some integrity, is not volatile and preferably is permeable to the gas used with the process, as well as being capable of locally inhibiting, stopping, interfering with, preventing, or the like, continued infiltration or any other kind of movement beyond the defined surface boundary of the ceramic filler. Barrier means may be used during spontaneous infiltration or in any molds or other fixtures utilized in connection with thermo-forming of the spontaneously infiltrated metal matrix composite, as discussed in greater detail below.

Suitable barrier means includes materials which are substantially non-wettable by the migrating molten matrix alloy under the process conditions employed. A barrier of this type appears to exhibit little or no affinity for the molten matrix alloy, and movement beyond the defined surface boundary of the filler material or preform is prevented or inhibited by the barrier means. The barrier reduces any final machining or grinding that may be required of the metal matrix composite product. As stated above, the barrier preferably should be permeable or porous, or rendered permeable by puncturing, to permit the gas to contact the molten matrix alloy.

Suitable barriers particularly useful for aluminum matrix alloys are those containing carbon, especially the crystalline allotropic form of carbon known as graphite. Graphite is essentially non-wettable by the molten aluminum alloy under the described process conditions. A particular preferred graphite is a graphite foil product that is sold under the trademark GRAFOIL®, registered to Union Carbide. This graphite foil exhibits sealing characteristics that prevent the migration of molten aluminum alloy beyond the defined surface boundary of the filler material. This graphite foil is also resistant to heat and is chemically inert. GRAFOIL® graphite foil is flexible, compatible, conformable and resilient. It can be made into a variety of shapes to fit any barrier application. However, graphite barrier means may be employed as a slurry or paste or even as a paint film around and on the boundary of the filler material or preform. GRAFOIL® is particularly preferred because it is in the form of a flexible graphite sheet. In use, this paper-like graphite is simply formed around the filler material or preform.

Other preferred barrier(s) for aluminum metal matrix alloys in nitrogen are the transition metal borides (e.g., titanium diboride (TiB₂)) which are generally non-wettable by the molten aluminum metal alloy under certain of the process conditions employed using this material. With a barrier of this type, the process temperature should not exceed about 875°C, for otherwise the barrier material becomes less efficacious and, in fact, with increased temperature infiltration into the barrier will occur. Moreover, the particle size of the barrier material may affect the ability of the material to inhibit spontaneous infiltration. The transition metal borides are typically in a particulate form (1-30 microns). The barrier materials may be applied as a slurry or paste to the boundaries of the permeable mass of ceramic filler material which preferably is preshaped as a preform.

Other useful barriers for aluminum metal matrix alloys in nitrogen include low-volatile organic compounds applied as a film or layer onto the external surface of the filler material or preform. Upon firing in nitrogen, especially at the process conditions of this invention, the organic compound decomposes leaving a carbon soot film. The organic compound may be applied by conventional means such as painting, spraying, dipping, etc.

Moreover, finely ground particulate materials can function as a barrier so long as infiltration of the particulate material would occur at a rate which is slower than the rate of infiltration of the filler material.

Thus, the barrier means may be applied by any suitable means, such as by covering the defined surface boundary with a layer of the barrier means. Such a layer of barrier means may be applied by painting, dipping, silk screening, evaporating, or otherwise applying the barrier means in liquid, slurry, or paste form, or by sputtering a vaporizable barrier means, or by simply depositing a layer of a solid particulate barrier means, or by applying a solid thin sheet or film of barrier means onto the defined surface boundary. With the barrier means in place, spontaneous infiltration substantially terminates when the infiltrating matrix metal reaches the defined surface boundary and contacts the barrier means.

Various demonstrations of the present invention are included in the Examples immediately following. However, these Examples should be considered as being illustrative and should not be construed as limiting the scope of the invention as defined in the appended claims.

### Example 1

The following Example demonstrates the utilization of a spontaneous infiltration technique utilizing an alloy sling to assist in the formation of a macrocomposite body comprising an open-ended metal matrix composite box with an aluminum alloy lip attached to the perimeter of the open-end of the box.

A rectangular graphite mold 12 having an inner cavity measuring about 2 inches (51 mm) long, about 1 inch (25 mm) wide, and about 1 inch (25 mm) deep, was made from a solid piece (description) of Grade ATJ graphite (Union Carbide Corporation, Graphite Products Division, Cleveland, OH). A graphite insert 20 measuring about 1.875 inches (48 mm) long, about 0.874 inch (25 mm) wide, and about 0.312 inch (7.9 mm) high was placed into the bottom of the graphite mold 12 so that an about 0.312 inch (7.9 mm) deep and about 0.063 inch (1.6 mm) wide channel was created between the perimeter of the graphite insert 20 and the inside wall of the rectangular graphite mold 12. The interior surfaces of the graphite mold and the exterior surfaces of the graphite insert were then spray coated with a mixture comprising by volume 50% DAG® 154 colloidal graphite (Acheson Colloids, Port Huron, MI), to make a coating 13. In addition, after the graphite mold and the graphite insert had been coated and dried, the interior of the graphite mold and the surface of the graphite insert were wiped with a cloth to remove any residue present within the graphite mold and on the graphite insert. The interior of the graphite mold and the surface of the graphite insert were then coated with -325 mesh (particle diameter less than about 45 µm) magnesium powder 21 (Reade Manufacturing Company, Lakehurst, NJ). The coating was effected by the use of a cotton-tipped applicator which was utilized similar to a paint brush. About 30 grams of a -325 mesh (particle diameter less than about 45 µm) aluminum alloy powder 14 comprising by weight about 7.5-8.5% Si; 3.0-4.0% Cu; 2.7-3.5% Zn; 0.2-0.3% Mg; ≤0.01% Ca; ≤0.01% Ti; 0.7-1.0% Fe; ≤0.50% Ni; ≤0.50% Mn; ≤0.35% Sn; ≤0.01% Be; ≤0.15% Pb; and the balance aluminum was placed into the channel defined by the perimeter of the graphite insert and the inside wall of the rectangular graphite mold. The aluminum alloy powder was leveled by gently shaking the graphite mold in a side-to-side motion. After the aluminum alloy powder 14 had been leveled, a thin coating of -325 mesh (particle diameter less than about 45 µm) magnesium powder 15 (Reade Manufacturing Company, Lakehurst, NJ) was placed on top of the -325 mesh (particle diameter less than about 45 µm) aluminum alloy powder 14 so as to lightly cover the aluminum alloy powder.

A filler material mixture 16 comprising by weight about 79.7% 39 CRYSTOLON® 220 grit (average particle diameter of about 66 lm) silicon carbide (Norton Company, Worcester, MA), about 19.4% 39 CRYSTOLON® 500 grit (average particle diameter of about 17 lm) silicon carbide, and about 2.9% -325 mesh (particle diameter less than about 45 µm) magnesium powder (Reade Manufacturing Company, Lakehurst, NJ) was made by placing the three materials into a plastic jar and gently shaking the plastic jar to effect mixing. About 20 grams of the filler material mixture were then placed on top of the -325 mesh (particle diameter less than about 45 µm) magnesium powder 15 which covered the -325 mesh (particle diameter less than about 45 µm) aluminum powder. The filler material mixture 16 covered the graphite insert 20 contained within the graphite mold 12. The filler material mixture 16 was leveled by gently shaking the graphite mold in a side-to-side motion. The level surface of the filler material mixture was about 0.38 inch (9.5 mm) above the upper surface of the graphite insert 20. About 0.15 grams of -50 mesh (particle diameter less than about 300 lm) magnesium powder 17 (ALFA® Johnson Matthey, Ward Hill, NJ) was then sprinkled evenly on the level surface of the filler material mixture 16. Copper foil strips 18 were then placed over the opening of the graphite mold to provide a support or sling means for supplying a matrix metal in the molten state. Thereafter, -50 mesh (particle diameter less than about 300 lm) magnesium powder 22 was sprinkled over the surface of the clean copper strips. A gap 23 existed between the copper strips 18 so that the matrix metal 19, after melting, could gain access to the filler material mixture 16 contained within the graphite mold 12.

An approximately 38 gram body of matrix metal 19 designated aluminum alloy 336 and nominally comprising by weight about 11.0-13.0% Si; ≤1.2% Fe; 0.5-1.5% Cu; ≤0.35% Mn; 0.7-1.3% Mg; 2.0-3.0% Ni; ≤0.35% Zn; ≤0.25% Ti; and the balance aluminum, was placed on top of the magnesium powder coated copper strips located over the opening of the graphite mold, to form a setup.

The setup was then placed into a stainless steel container 10 measuring about 10 inches (254 mm) wide, about 12 inches (305 mm) long, and about 3 inches (76 mm) high. Prior to disposing the setup within the stainless steel container 10, a piece of Grade PF-25-H PERMA FOIL graphite foil 11 (TTAmerica, Portland, OR) measuring about 12 inches (305 mm) long, about 10 inches (254 mm) wide and about 0.01 inch (0.25 mm) thick, was placed on the bottom of the inner cavity of the stainless steel container. About 10 grams of a titanium sponge material 24 (Chemalloy Company, Incorporated, Bryn Mawr, PA) and about 15 grams of -50 mesh (particle diameter less than about 300 lm) magnesium powder 25 (Reade Manufacturing Company, Lakehurst, NJ) were sprinkled into the bottom of the stainless steel container 10 around the outer edges of the graphite mold and on top of the graphite foil sheet 11. Both the titanium sponge material and the magnesium powder were utilized as oxygen-getters. A second piece of graphite foil 26 was placed over the top of the setup and pressed against the outer walls of the setup.

The lay-up, comprising the stainless steel container 10 and its contents, was placed into a retort contained within a resistance heated furnace and the retort door was closed. The retort chamber was evacuated to about 30 inches (762 mm) of mercury vacuum and then backfilled with nitrogen gas at a flow rate of about 10 liters per minute. The nitrogen gas flow rate was maintained as the furnace and its contents were heated from room temperature to about 815°C at about 400°C per hour. After about 15 hours at about 815°C with a nitrogen gas flow rate of about 10 liters per minute, the stainless steel container and its contents were removed from the furnace and excess matrix metal was poured out of the graphite mold. The graphite mold and its contents, which were at a temperature of about 815°C, were then placed onto a water cooled aluminum chill plate, which was at about room temperature, and the top of the graphite mold was covered with an insulating ceramic blanket. By maintaining the high temperature at the top of the setup and contacting a heat sink with the bottom at the setup, directional solidification of the molten metal contained within the setup was achieved.

After the setup had cooled to room temperature, the setup was disassembled to reveal that the matrix metal had infiltrated the filler material mixture to form a macrocomposite body comprising a thin walled metal matrix composite box with an aluminum alloy lip attached to the perimeter of the open-end of the box.

### Example 2

The following Example demonstrates a method for forming magnesium nitride within at least a portion of a filler material prior to contacting it with a matrix metal to form a metal matrix composite body. Specifically, this Example demonstrates: (1) that by reacting nitrogen with magnesium within a filler material that magnesium nitride forms within at least a portion of the filler material; (2) that the nitridation may be performed in a rotary kiln; and (3) that the nitrided filler material after removal from the rotary kiln, when contacted with a matrix metal may form a metal matrix composite body.

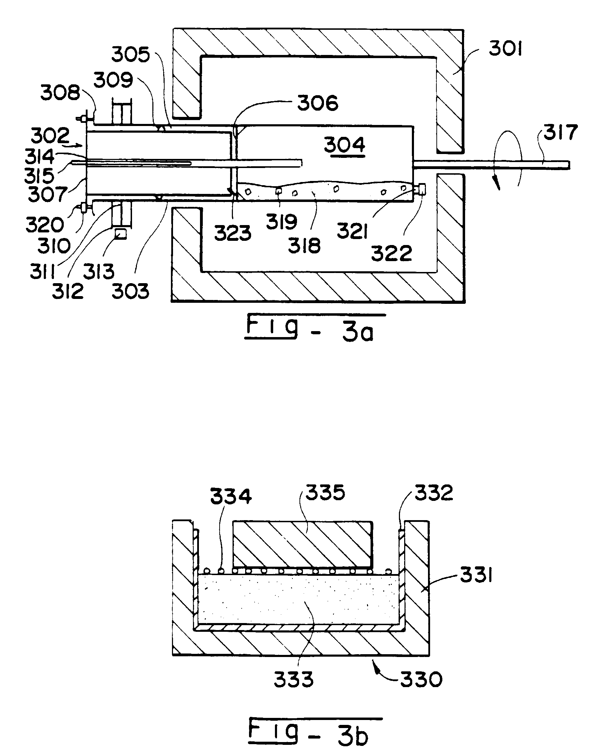

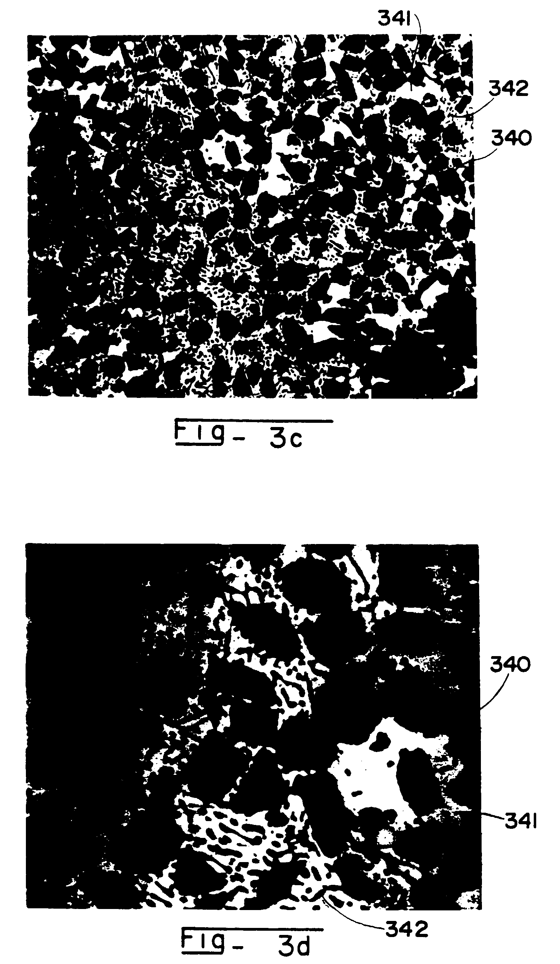

A rotary kiln, depicted schematically in Figure 3a, was fabricated by inserting a rotatable retort 302 manufactured from American Iron and Steel Institute (AISI) Type 304 stainless steel, into a resistance heated air atmosphere furnace 301. The rotatable retort 302 was comprised of a tubular chamber 303 segmented into a reaction cavity 304 and a plug cavity 305 separated by a dividing wall 306. The tubular chamber 303 measured about 25 inches (635 mm) long, had an outer diameter of about 6 inches (152 mm) and a wall thickness of about 11 gauge (about 0.12 inch or about 3 mm). The reaction cavity 304 measured about 13.5 inches (343 mm) long, the plug cavity 305 measured about 11 inches (279 mm) long, and the dividing wall extended radially inward from the inner diameter of the tubular chamber 303 by about 2 inches (51 mm) and had a thickness of about 7 gauge (about 0.18 inch or about 4.6 mm). A drive shaft 317, measuring about 12 inches (305 mm) long and having an about 3/8 inch (9.5 mm) diameter was attached coaxially to an end wall at the reaction chamber end of the tubular chamber 303. Additionally, an outlet 321 comprised of a Schedule 40 pipe manufactured from AISI Type 304 stainless steel and having nominal diameter of about 1/2 inch (13 mm) and a length of about 3/4 inch (19 mm) was located in the end wall of the tubular chamber 303. The outlet 321 was provided with a cap 322. Flange 308 for attaching plug 307 to the tubular chamber 303 with four alignment bolts 320 and secured by nuts 310 was located at the plug cavity end of the tubular chamber 303. Flange 308 extended radially outward from the inner diameter of the tubular chamber 303 by about 2.2 inches (5.6 mm) and had a thickness of about 11 gauge (about 0.12 inch or about 3 mm).

Plug 307 was comprised of a tubular body, a face plate, an end plate, and an inlet tube 314. Plug 307 measured about 11.25 inches (286 mm) long had an outer diameter of about 5 inches (127 mm), and a wall thickness of about 11 gauge (about 0.12 inch or about 3 mm). The face plate having a diameter of about 8 inches (203 mm) and a thickness of about 11 gauge (about 0.12 inch or about 3mm) had four holes corresponding to alignment bolts 320 for mounting plug 307 within plug cavity 305 of tubular chamber 303. The end plate having a diameter of about 5 inches (127 mm) formed the end of plug 307 inserted extending into plug cavity 305. The inlet tube 314 was attached to the face and end plates and mounted coaxially within plug 307. Further, inlet tube 314 was comprised of an AISI Type 304 stainless steel schedule 40 pipe having a nominal diameter of about 0.25 inch (6.4 mm) and a length of about 18 inches (457 mm). Six spacers 309 were located equidistant along the outer diameter of plug 307. These spacers 309 aligned plug 307 coaxially within the plug cavity 305 of the tubular chamber 303.

A drive guide 312 having an inner diameter of about 9 inches (229 mm) was manufactured from a piece of C channel, having a width of about 1.5 inches (3.8 mm) and a channel depth of about 0.5 inch (13 mm). A drive guide support 311 extended radially outward from the outer diameter of the tubular chamber 303 to the inner diameter of the drive guide 312 and had a thickness of about 7 gauge (about 0.18 inch or 4.6 mm). The drive guide 312 engaged two rollers 313 while the rotatable retort 302 was rotated either by directly coupling drive shaft 317 to or by coupling drive shaft 317 through a transmission having a 15:1 reduction ratio to an about one horse power electric motor (Milwaukee Electric Tool Corporation, Brookfield, WI).

To form magnesium nitride within a filler material, about 1000 grams of a filler material mixture 318 comprised of filler material and about 3 percent by weight magnesium powder were placed into reaction chamber 304 with about 500 grams of a BURUNDUM® alumina milling media 319 (U.S. Stoneware, Mahwah, New Jersey). The milling media 319 had a diameter of about 1/2 inch (13 mm) and a length of about 1/2 inch (13 mm). Space 323 between the dividing wall 306 and the end plate of plug 307 was filled with a piece of CERABLANKET® ceramic blanket having a thickness of about 1/2 inch (13 mm) and two pieces of PERMA FOIL graphite foil (TTAmerica, Portland, OR). The ceramic blanket contacted the end plate of plug 307 while the graphite foil contacted the dividing wall 306. Plug 307 was then tightened to flange 308 by tightening the nuts 310 on the four alignment bolts 320. As nuts 310 were tightened, the end plate of plug 307 compressed the ceramic blanket thereby forcing the graphite foil to contact dividing wall 306 to substantially form a seal. The rotatable retort 302 was then placed into the air atmosphere resistance heated furnace 301 so that the two rollers 313 contacted drive guide 312 and supported rotatable retort 302. Drive shaft 317 was then also connected either directly or through a transmission to the electric motor. A purge tube 315 having an outer diameter corresponding substantially to the inner diameter of inlet tube 314 was inserted into inlet tube 314 to provide a nitrogen atmosphere to reaction cavity 304. The space between the outer diameter of purge tube 315 and the inner diameter of inlet tube 314 was substantially sealed with pieces of graphite foil.

The parameters used to prepare Samples A through E are listed in Table I. Specifically, Table I lists the type and massa of the filler materials, the additions to the filler materials, the mass of 1/2 inch (13 mm) diameter milling media combined with the filler material, the heating schedule for a particular sample, the gas flow rate for the particular sample and the rotational speed of the rotatable retort 302 in revolutions per minutes (rpm) during processing. Samples A through E were heated to the temperatures presented in Table I at about 400°C per hour.

The following sections discuss some observations noted during the preparations of Samples A through E.

### Sample A

The filler material mixture 318 of Sample A was comprised by weight of about 97 percent 39 CRYSTOLON® 500 grit (average particle diameter of about 17 microns) silicon carbide (Norton Company, Worcester, MA) and about 3 percent -325 mesh (particle diameter less than about 45 microns) magnesium powder (Hart Corporation, Tamaqua, PA). After the filler material mixture 318 and the milling media 319 were placed into the reaction chamber 304 of the rotatable retort 302, the nitrogen purge tube 315 was provided into inlet tube 314 and a nitrogen flow rate of from about 2 to about 3 liters per minute was introduced into the reaction chamber 304. The rotatable retort 302 and its contents were then rotated at about 90 revolutions per minute while the furnace 301 and its contents were heated to about 250°C at a rate of about 400°C per hour. After about an hour at about 250°C, the furnace 301 and its contents were heated to about 750°C at a rate of about 400°C per hour. After about 1/2 hour at about 750°C, the power to the furnace 301 was interrupted while the flowing nitrogen was maintained at about 2 to 3 liters per minute into the reaction chamber 304 and the rotatable retort 302 continued to be rotated at about 90 rpm. After the kiln and its contents had cooled to about 350°C, the electric motor was disconnected from the drive shaft 317, and the rotatable retort 302 was removed from the furnace 301 to allow the retort and its contents to cool more rapidly. After the rotatable retort 302 and its contents had cooled to about room temperature, the filler material was removed from the reaction chamber 304 and placed into two jars. The filler material was greenish yellow and when contacted with water, an exothermic reaction and an odor characteristic of ammonia was noted. These observations correspond to characteristics of magnesium nitride.

### Sample B

The filler material mixture 318 for this Sample was comprised by weight of about 97 percent 150 grit (average particle diameter of about 122 microns) silicon carbide (Norton Company, Worcester, MA) and the balance -325 mesh (particle diameter less than about 45 microns) magnesium (Hart Corporation, Tamaqua, PA). The methods of Sample A were substantially repeated. It was further noted during the heating of the rotatable retort 302 and its contents, from about 250°C to about 750°C at a rate of about 400°C per hour, that the noise produced by the milling media 319 when it contacted the inner diameter of the reaction chamber 304 during rotation substantially stopped. Specifically, the noise substantially stopped between about 665°C to about 670°C. At about 673°C, the noise resumed, however not to an intensity equivalent to the noise prior to about 665°C. The reduced noise continued through to about 750°C. After about 0.5 hours at about 750°C, the power to the furnace 301 was interrupted and the furnace 301 and its contents were allowed to cool while maintaining the flowing nitrogen. The flowing nitrogen was continued for about 14 hours at which time the filler material was sampled. The filler material was yellow, free flowing, and as with Sample A when contacted with water, an exothermic reaction and an odor characteristic of ammonia were noted.

### Sample C

The filler material mixture of Sample C was substantially the same as that of Sample A except that the -325 mesh magnesium powder was replaced with -200 mesh (particle diameter less than about 75 microns) magnesium powder (Hart Corporation, Tamaqua, PA). Unlike Samples A and B, Sample C was heated to about 250°C and then to about 670°C. At about 670°C, the rotatable retort 302 was removed from the furnace 301. Several samples of filler material were then removed from the reaction chamber 304. It was noted that this filler material was agglomerated. Further, the filler material was mainly dark green-gray with some yellow areas. This gray-green filler material, when contacted with water, did not exhibit an exothermic reaction.

The rotatable retort 302 was immediately reassembled. Nitrogen was reintroduced through purge tube 314 into reaction chamber 304, and rotatable retort 302 was replaced into furnace 301. The furnace 301 and its contents were again heated to about 750°C at a rate of about 400°C per hour, held at about 750°C for about 0.5 hours and then cooled to about 160°C. At about room temperature, the rotatable retort 302 was opened and it was noted that the filler material was bright greenish yellow and free flowing.

### Sample D

The filler material mixture 318 of Sample D was comprised by weight of about 97 percent 500 grit (average particle diameter of about 17 microns) silicon carbide (Norton Company, Worcester, MA) and about 3 percent -325 mesh (particle diameter less than about 45 microns) magnesium powder (Hart Corporation, Tamaqua, PA). The method of Sample A was substantially repeated except that instead of holding the furnace 301 and its contents at about 750°C for about 1/2 hour, the furnace 301 and its contents were held at about 670°C for about 1/2 hour. After the rotatable retort 302 and its contents had cooled to about room temperature, the filler material and milling media 319 were removed from the reaction chamber 304 of rotatable retort 302 and it was noted that the filler material was free flowing.

To prepare the filler material for a traditional spontaneous infiltration with a matrix metal (not according to the invention) the filler material was separated from the milling media 319 by placing the mixture comprising both in a stainless steel can having holes. The holes permitted the free flowing filler material to pass through the bottom of the can while capturing the milling media 319 within the can. After the filler material was separated from the milling media 319, it was then prepared for infiltration by a matrix metal (not according to the invention). Specifically, as illustrated in a cross-sectional schematic view in Figure 3b, a Grade ATJ graphite mold 331 (Union Carbide Corporation, Carbon Products Division, Cleveland, OH) measuring about 6 inches (152 mm) square by about 3 inches (76mm) deep and having a wall thickness of about 1/8 inch (3 mm) and lined with a box 332 made from PERMA FOIL graphite foil (TTAmerica, Portland, OR) was filled with about 100 grams of filler material 333. The filler material 333 within the graphite foil box 332 was leveled by repeatedly tapping the side of the graphite mold 331. About 24 grit (average particle diameter of about 1035 microns) magnesium powder 334 (Hart Corporation, Tamaqua, PA) was then evenly sprinkled to substantially cover the leveled filler material 333. An ingot of matrix metal 335 comprising by weight about 12 percent silicon and the balance aluminum and weighing about 330 grams was placed on the magnesium powder 334 to form a lay-up 330.

The lay-up 330 comprising the graphite foil lined graphite mold 331 and its contents was then placed into a controlled atmosphere retort lined furnace preheated to about 220°C. After the retort door was closed, the retort was evacuated using a mechanical roughing pump. Then, the mechanical roughing pump was disengaged from the retort and it was backfilled with nitrogen gas to approximately atmospheric pressure. A nitrogen gas flow rate through the retort of about 5 liters per minute was established and maintained. The furnace and its contents were then heated from about 220°C to about 750°C at a rate of about 400°C per hour. After about 1 hour at about 750°C, the furnace and its contents were cooled to about room temperature. At about room temperature, the nitrogen flow rate was interrupted and the retort door was opened to reveal that a portion of the filler material 333 had been infiltrated by the matrix metal 335 thereby forming a metal matrix composite body.

The metal matrix composite body was cut, mounted, and polished for metallographic examination. Specifically, Figure 3c is a photomicrograph taken at about 400X magnification corresponding to the metal matrix composite body formed using the filler material 333 of Sample D. The features of the microstructure are identified in Figure 3c as the silicon carbide filler 340, the matrix metal 341 and precipitates 342 within the matrix metal 341. Additionally, Figure 3d is a photomicrograph taken at about 1000X magnification corresponding to the metal matrix composite body formed using the filler material 333 from Sample D. As with Figure 3c, the features of the microstructure in Figure 3d are identified as the silicon carbide filler 340, the matrix metal 341 and precipitates 342 within the matrix metal 341.

### Sample E

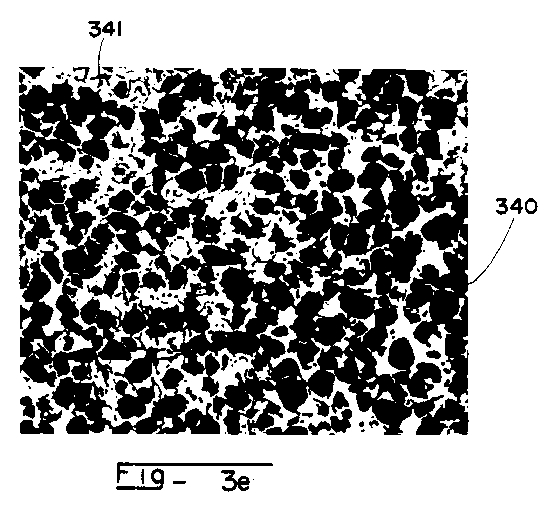

The method of Sample D was substantially repeated except that the temperature to which the furnace 301 and its contents were heated was about 710°C and the rotational speed of the rotatable retort 302 during the processing was about 30 rpm. As with Sample D, the filler material 330 was separated from the milling media 319 by placing the mixture comprising both into a stainless steel can that would capture the milling media 319 while allowing the filler material 333 to pass through and into a graphite foil 332 lined graphite boat 331 substantially the same as that used within Sample D. As with Sample D, the filler material 333 of Sample E was prepared in a lay-up 330 with a matrix metal 335 as depicted in Figure 3b. Infiltration of the filler material 333 was performed (not according to the invention) at about 780°C for about 3 hours. After cooling to about room temperature, the graphite boat 331 and its contents were removed from the retort and it was noted that the matrix metal 335 had infiltrated a portion of the filler material 333 to form a metal matrix composite body. Figure 3e is a photomicrograph taken at about 400X magnification corresponding to the metal matrix composite body formed using the filler material 333 from Sample E. The features of the microstructure of the metal matrix composite body include the silicon carbide particles 340 and the matrix metal 341.

Thus, this Example demonstrates that magnesium nitride can be formed within at least a portion of a filler material by heating a filler material mixture comprising magnesium powder in the presence of a nitrogen atmosphere. This Example, demonstrates further that the resultant filler material can be spontaneously infiltrated in the usual way by a matrix metal to form a metal matrix composite body.

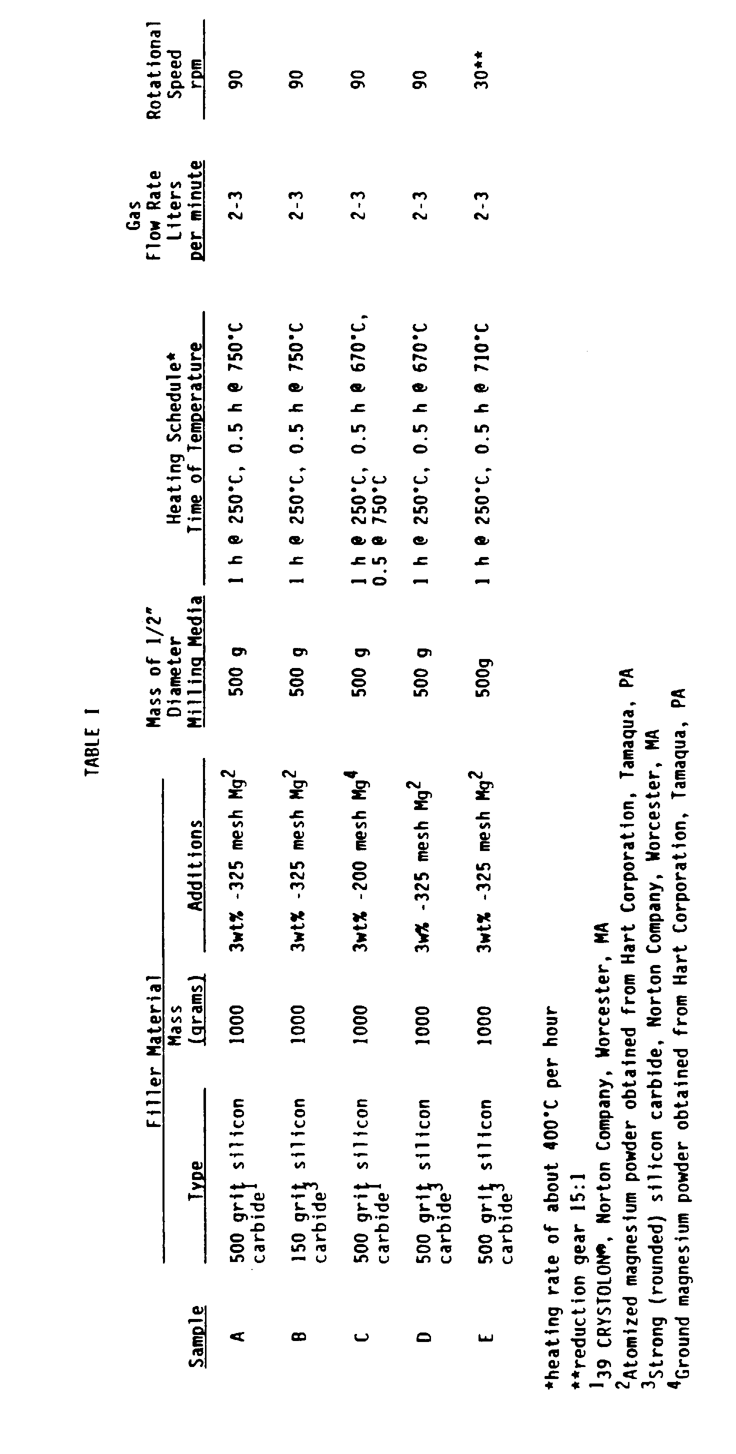

### Example 3

The following Example demonstrates a method for forming magnesium nitride within at least a portion of a filler material prior to contacting it with a matrix metal to form a metal matrix composite body. Specifically, this Example demonstrates: (1) that by reacting nitrogen with magnesium within a filler material mixture that magnesium nitride forms within at least a portion of the filler material; and (2) that the nitridation may be performed in a fluidized bed reactor.

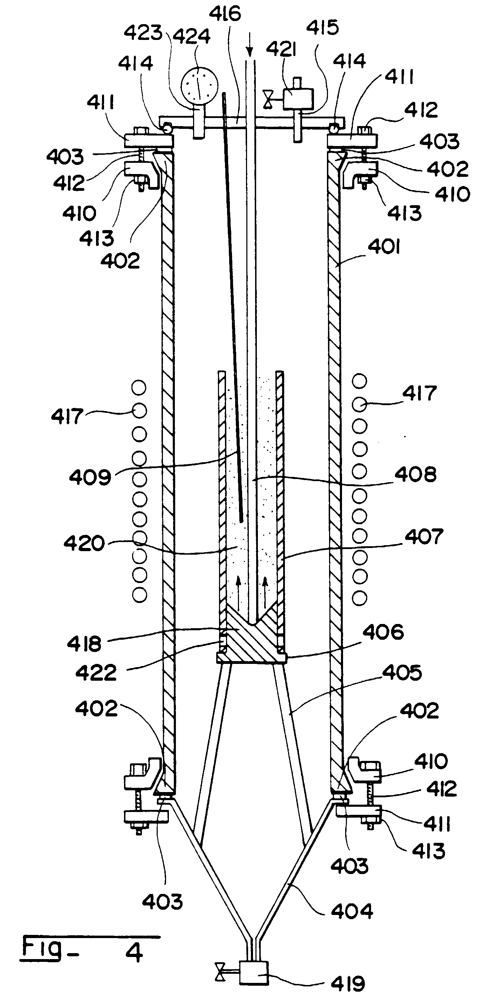

A fluidized bed reactor, illustrated in a cross-sectional schematic view in Figure 4, was assembled. The fluidized reactor comprised a tubular susceptor 407, a gas diffuser 418, a dip tube 408, and a reactor tube 401 having a top end sealed by a reactor top 416 and a bottom end contacting a discharge funnel 404. Specifically, the reactor tube 401 measured about 36 inches (914 mm) long, had an inner diameter of about 6 inches (152 mm), and a wall thickness of about 0.44 inch (11 mm). Further, the reactor tube 401 was comprised of a quartz tube (Thermal American Fused Quartz, Voorhees, NJ) having conical pipe joints 402 at opposite ends. The reactor tube 401 was supported horizontally.

Discharge funnel 404 measuring about 6 inches (152 mm) from end to end comprising: (1) a top end, which mated with the bottom end of reactor tube 401, having an inner diameter of about 6 inches (152 mm) and an outer diameter of about 6.9 inches (175 mm); (2) a bottom end having a diameter of about 0.5 inch (13 mm) welded to a schedule 40 stainless steel pipe having a nominal diameter of about 0.5 inch (13 mm); and (3) a susceptor support 405 extending from the inner surface of discharge funnel 404, into reactor tube 401, and to susceptor holder 406. Discharge funnel 404, susceptor support 405, and susceptor holder 406 were fabricated from AISI Type 304 stainless steel sheet having a thickness of about 11 gauge (about 0.12 inches or about 3 mm). Discharge funnel 404 was attached to the bottom end of the reactor tube 401 by a first conical pipe clamp comprised of a coupling ring 410, an attachment ring 411, and several bolts 412 extending through coupling ring 410 and attachment ring 411 and fastened by coupling nuts 413. Gasket 403 comprised of a silicone rubber was placed between the bottom end of reactor tube 401 and the flange of discharge funnel 404 prior to tightening coupling nuts 413. A gas tight seal was formed between discharge funnel 404 and the bottom end of reactor tube 401 by tightening the coupling nuts 413. The stainless steel pipe at the bottom of discharge funnel 404 was terminated with discharge valve 419.

A second conical pipe clamp located at the top end of the reactor tube 401 was also comprised of a coupling ring 410, an attachment ring 411 and several coupling bolts 412 extending through attachment ring 411 and coupling ring 410 and fastened by coupling nuts 413. Coupling nuts 413 were tightened on coupling bolts 412 to compress gasket 403 comprised of a silicone rubber between attachment ring 411 and the top end of reaction tube 401 to create a seal. A gas tight seal was formed between attachment ring 411 at the top end of reactor tube 401 and reactor top 416 when several claw clamps (not shown in Figure 4) were tightened to compress O-ring 414.

Compound pressure gauge 424 communicated with the atmosphere within reactor tube 401 via tube 423 extending through reactor top 416. Thermocouple 409, dip tube 408 and gas outlet tube 415 also extended through reactor top 416. Gas outlet tube 415 was terminated by gas outlet valve 421. Dip tube 408 comprised of mullite (Coors Ceramic Company, Golden, CO) measuring about 30 inches (762 mm) and having an outer diameter and inner diameter of about 0.3 inch (7.6 mm) and about 0.2 inch (5 mm), respectively, was movably mounted to and extended through reactor top 416 to contact gas diffuser 418 during processing. Thermocouple 409 comprised a Type K thermocouple shielded with a closed end mullite tube (Bolt Technical Ceramics, Conroe, TX).

Susceptor 407 had an outer diameter of about 2.5 inches (64 mm) and an inner diameter of about 2 inches (51 mm) and when engaged to gas diffuser 418 measured about 18 inches (457 mm) long. Susceptor 407 and gas diffuser 418 were supported by susceptor holder 406 so as to coaxially align with reactor tube 401. Additionally, susceptor holder 406 supported susceptor 407 within reactor tube 401 so that the bottom ends of each were spaced about 9 inches (229 mm) apart. In other words, susceptor 407 was centered within and coaxially aligned to reactor tube 401. Susceptor 407 and gas diffuser 418 were manufactured from Grade H-490 graphite (Great Lakes Carbon Corporation, Morgantown, NC). The angle of the conical cavity within the gas diffuser 418 was about 60 degrees. When susceptor 407 contained a filler material mixture 420, a gas flowing through the end of dip tube 408, which engaged gas diffuser 418, percolated through filler material mixture 420 to create a fluidized bed. Induction coils 417 were energized and inductively coupled with susceptor 407 thereby heating it. Heated susceptor 407 in turn heated the filler material mixture 420 and the flowing gas. When the fluidizing gas comprised nitrogen and the filler material mixture comprised magnesium powder and a filler material, nitrogen reacted with the magnesium intermingled with the filler material thereby forming magnesium nitride within at least a portion of the filler.

Sample F and Sample G of this Example demonstrate two processing variations among the many possibilities available to form magnesium nitride within at least a portion of a filler material.

### Sample F

A filler material mixture 420 comprised by weight 19 percent 39 CRYSTOLON® 500 grit (average particle diameter of about 17 microns) silicon carbide, 78 percent 39 CRYSTOLON® 220 grit (average particle diameter of about 66 microns) silicon carbide (Norton Company, Worcester, MA) and about 3 percent -325 mesh (particle diameter less than about 45 microns) magnesium powder (Hart Corporation, Tamaqua, PA) was placed into susceptor tube 407 terminated by gas diffuser 418 to establish a filler material mixture depth of about 6.5 inches (165 mm). The susceptor tube 407 and its contents were then coaxially aligned within reactor tube 401 and supported by holder 406. The fluidized bed reactor was then sealed by compressing 0-ring 414 between reactor top 416 and upper attachment ring 411 with several claw clamps (not shown in Figure 4).

The fluidized bed reactor was then evacuated to about 30 inches (762 mm) of mercury vacuum as indicated by compound gauge 424. After about 20 minutes at about 30 inches (762 mm) of mercury vacuum and with the dip tube 408 just extending through reactor top 416, the fluidized bed reactor was slowly backfilled with argon to about atmospheric pressure without disturbing filler material mixture 420 within susceptor 407. After the pressure within the fluidized bed reactor reached about atmospheric pressure, dip tube 408 was extended further through filler material mixture 420 and the end of dip tube 408 was contacted with the vertex of gas diffuser 418. The flow rate of argon was then established at about 7 liters per minute to fluidize the filler material mixture 420.

Induction coils 417 were then energized to inductively heat susceptor 407 thereby heating the filler material mixture 420 to a temperature of about 600°C in about 1/2 hour. After about 10 minutes, during which time the temperature within the fluidized bed was stabilized to about 600°C and the reactor pressure registered at about 0.5 lbs per square inch gauge (0.035 kilograms per square centimeter), the argon flowing through dip tube 408 was slowly replaced with nitrogen to establish a nitrogen flow rate of about 10 liters per minute. The susceptor 407 and its contents were then heated from about 600°C to about 660°C in about 30 minutes. After the filler material mixture 420 reached about 660°C, the power to the induction coil 417 was interrupted and the nitrogen flow rate was decreased to about 5 liters per minute. After about 13.5 hours, the gas supply providing nitrogen through dip tube 408 was closed to interrupt the nitrogen flow. Gas outlet valve 421 was also closed. After the fluidized bed reactor and its contents were evacuated to about 30 inches (762 mm) of mercury vacuum, the gas supply to dip tube 408 was reconnected and nitrogen gas was injected through dip tube 408 to blow filler material mixture 420 out of susceptor 407 and onto discharge funnel 404. After an atmospheric pressure was established within the fluidized bed reactor, discharge valve 419 was opened to sample the filler material. The filler material appeared dark gray to shiny black and upon exposure to air, an odor characteristic of ammonia was noted.

### Sample G

This Sample demonstrates an alternative method of preparing a filler material mixture 420 through the use of the fluidized bed reactor. The method for Sample F was substantially repeated except that the about 30 inches (762 mm) of mercury vacuum was held for about 5 minutes and the fluidized bed reactor was backfilled with nitrogen gas rather than argon gas. Furthermore, the nitrogen flow rate was about 8 liters per minute during the initial 3 minutes of heating the filler material mixture 420 from about 30°C to about 354°C. At about 354°C, the nitrogen flow rate was reduced to about 5 liters per minute and the filler material mixture 420 was heated to a temperature of about 582°C in about 6 minutes. At about 582°C, the nitrogen flow rate was increased to about 6 liters per minute, and the susceptor 407 and its contents were heated to about 600°C and maintained at about atmospheric pressure. During the hold at about 600°C, it was observed that the filler material mixture 420 began to agglomerate. After about 1/2 hour at about 600°C, the fluidized bed reactor and its contents were shaken and the temperature in the filler material mixture 420 was increased to about 714°C. The rapid temperature rise suggested that some filler material mixture 420 had agglomerated on thermocouple 409. The power to the induction coils 417 was then interrupted and the filler material was cooled by the flowing nitrogen. After about an hour, the filler material was forced out of susceptor 407 and into the discharge funnel 404 substantially by the method of Sample F. Discharge valve 419 was then opened to obtain a filler material sample. The sample was greenish yellow and when exposed to air produced an odor characteristic of amonia. Both observations are consistent with characteristics of magnesium nitride.

Thus, this Example demonstrates the use of a fluidized bed reactor as an alternative method for forming magnesium nitride within at least a portion of a filler material.

### Example 4

This Example demonstrates that it is possible to form magnesium nitride within at least a portion of a filler material in a nitrogenous atmosphere and at a temperature below the melting temperature of the matrix metal. After the furnace is evacuated to accommodate the replacement of nitrogen with argon, the furnace and its contents are heated to a temperature above the melting point of the matrix metal and the matrix metal infiltrates the filler material to form a metal matrix composite body.

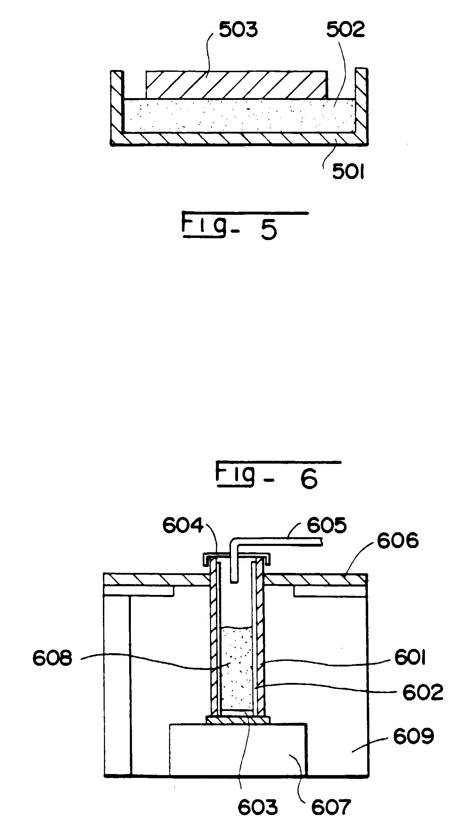

Figure 5 shows a cross-sectional schematic of the lay-up used to produce the metal matrix composite of this Example by a traditional spontaneous infiltration not according to the invention. Specifically, an alumina boat 501 having an internal cavity measuring about 3.75 inches (95 mm) long, about 1.8 inches (46 mm) wide, and about 0.79 inch (20 mm) deep was filled with about 126 grams of a filler material mixture 502. The filler material mixture 502 was comprised by weight of about 95 percent 38 ALUNDUM® 220 grit (average particle diameter of about 66 microns) alumina (Norton Company, Worcester, MA) and about 5 percent -325 mesh (particle diameter less than about 45 microns) magnesium powder (Reade Manufacturing Company, Lakehurst, New Jersey). A matrix metal 503 measuring about 2 inches (51 mm) long, about 1 inch (25 mm) wide, and about 0.5 inch (13 mm) thick was placed onto the filler material mixture 502 within the alumina boat 501 to form a lay-up. The matrix metal 503 was comprised of Aluminum Association alloy 170.1 having a nominal composition of about 99.7% by weight aluminum.

The lay-up comprising the alumina boat 501 and its contents was then placed into a resistance heated tube furnace at about room temperature. The tube furnace was substantially sealed, and the tube and its contents were evacuated to about 30 inches (762 mm) of mercury vacuum. Subsequently, nitrogen at a flow rate of about 0.5 liters per minute was introduced into the tube furnace, and the tube furnace and its contents were heated to about 540°C at about 200°C per hour. After about 2 hours at about 540°C, the nitrogen flow rate was interrupted and the tube furnace and its contents were evacuated a second time to about 30 inches (762 mm) of mercury vacuum. Subsequently, argon at a flow rate of about 0.5 liters per minute was introduced into the tube, and the tube furnace and its contents were heated to about 800°C at a rate of about 200°C per hour. After about 2 hours at about 800°C with an argon flow rate of about 0.5 liters per minute, the tube furnace and its contents were cooled to about room temperature at a rate of about 300°C per minute. At about room temperature, the alumina boat 501 and its contents were removed from the tube furnace to reveal that the matrix metal 503, while under an argon atmosphere, had infiltrated the filler material thereby forming a metal matrix composite body.

### Example 5

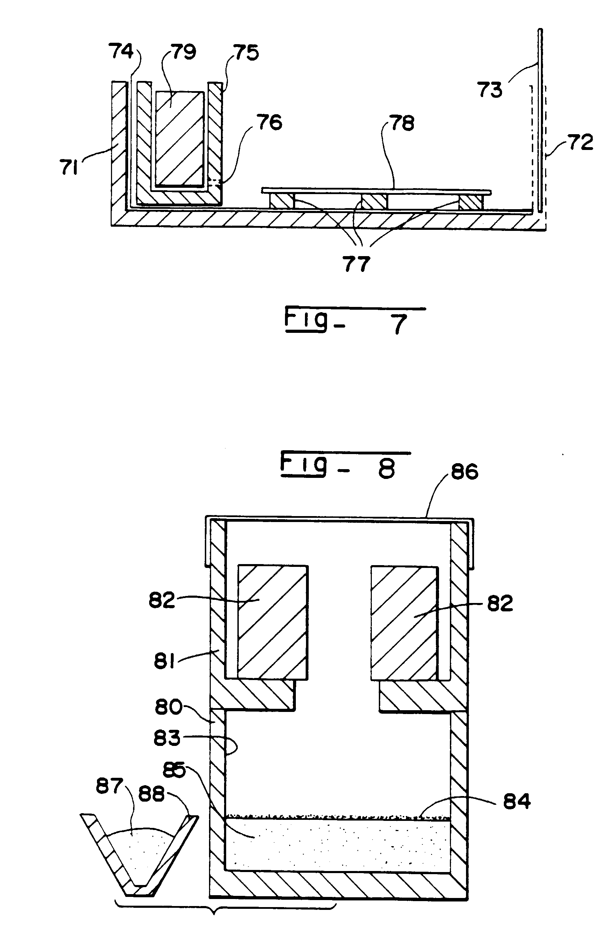

The following Example shows an embodiment of the complete method of the present invention and demonstrates that it is possible to form a metal matrix composite body by first nitriding magnesium within at least a portion of a filler material and subsequently contacting a molten matrix metal with the filler material to spontaneously infiltrate the filler material, thereby forming a metal matrix composite body. Figure 6 is a cross-sectional schematic view of the equipment used to form the metal matrix composite of this Example.

A filler material mixture 608 comprising by weight about 78 percent 39 CRYSTOLON® 220 grit silicon carbide (Norton Company, Worcester, MA) having an average particle diameter of about 66 microns, about 19 percent 39 CRYSTOLON® 500 grit silicon carbide (Norton Company, Worcester, MA) having an average particle diameter of about 17 microns, and about 3 percent -325 mesh magnesium powder (Hart Corporation, Tamaqua, PA) was ball milled for about 2 hours with BURUNDUM® alumina milling media to produce a substantially homogeneous mixture. The weight ratio of milling media to filler material mixture during milling was 2:1.

The filler material mixture 608 was then placed into a cylinder measuring about 28 inches (711 mm) long, having an inner diameter of about 6 inches (152 mm) and a wall thickness of about 11 gauge (about 0.12 inch or 3 mm). The cylinder 601 was manufactured from AISI Type 304 stainless steel. Further, the inner diameter of the cylinder 601, as well as its bottom, were lined with three layers of PERMA FOIL graphite foil (TTAmerica, Portland, OR). Each layer of the graphite foil had a thickness of about 0.02 inch (0.5 mm). After placing and leveling about 11 kilograms of the filler material mixture 608 into the graphite foil 602 lined stainless steel cylinder 601, it was noted that the height of the filler material mixture 608 within the cylinder 601 was about 14 inches (356 mm).

The cylinder 601 and its contents were then placed into a resistance heated air atmosphere furnace 609 and on a refractory pedestal 607 so that the top portion of the cylinder 601 extended beyond the top portion of the furnace 609. A piece of CERABLANKET® ceramic blanket 606 having a hole with a diameter corresponding to the outer diameter of cylinder 601 was placed around the cylinder 601. Two layers 604 of copper foil were placed over the opening of the cylinder 601 and crimped down over its edges to form a cover. A hole having a diameter of about 0.25 inch (6.4 mm) was made through the two layers 604 of copper foil and a steel tube 605 having a 0.25 inch (6.4 mm) outer diameter was placed through the hole. Nitrogen flowing at a rate of about 28 liters per minute was then introduced through steel tube 605 into the internal cavity of the cylinder 601. The furnace 609 and its contents were then heated from about room temperature to about 250°C at a rate of about 400°C per hour. After about 12 hours at about 250°C, while maintaining the nitrogen flow rate of about 28 liters per minute, the furnace 609 and its contents were heated to a temperature of about 750°C at about 400°C per hour. After about 4 hours at about 750°C, while maintaining the nitrogen flow rate of about 28 liters per minute, about 12 kilograms of a molten matrix metal comprised by weight of about 12 percent silicon and the balance aluminum and at a temperature of about 750°C, were poured through the two layers 604 of copper foil and onto the filler material mixture 608. After all the molten matrix metal had poured through the two layers 604 of copper foil, the furnace 609 and its contents were maintained at about 750°C for about 5 minutes. The power to the furnace 609 was then interrupted and cylinder 601 and its contents were removed from the furnace 609 and placed on a water cooled copper chill plate to directionally solidify the matrix metal.

At about room temperature, cylinder 609 was disassembled to reveal that the matrix metal had infiltrated the filler material to form a metal matrix composite body.

Thus, this Example demonstrates a method for forming a metal matrix composite body by forming magnesium nitride within at least a portion of the filler material and subsequently infiltrating the filler material with a molten matrix metal to form a metal matrix composite.

### Example 6

This example demonstrates a method for contacting molten matrix metal to a preform of filler material in accordance with the present methods of the invention.

An aqueous solution of BLUONIC® A colloidal alumina (Wesbond Corp., Wilmington, DE) totalling about 61.6 grams was diluted with about 122.6 grams of deionized water and placed into a 16 ounce NALGENE® plastic jar (Nalge Company, Rochester, NY). About 430.4 grams of 220 grit (average particle diameter of about 66 microns) 39 CRYSTOLON® green silicon carbide particulate (Norton Company, Worcester, MA) and about 184.8 grams of 500 grit (average particle diameter of about 17 microns) 39 CRYSTOLON® green silicon carbide particulate were added to the jar. An amount of Dow experimental ceramic binder XUS40303.00 (Dow Chemical Company, Midland, MI), weighing approximately 0.6 grams, was added to the jar to prepare a slurry for casting. The jar and its contents were roller milled for about 2 hours, then the jar and its contents were placed on an orbital mixer and mixed for about 2 hours, then removed.

A Grade GI-1000 silicone rubber mold (Plastic Tooling Supply Company, Exton, PA) having a circular internal cavity measuring about 6 inches (152 mm) in diameter by about 0.0635 inch (2 mm) deep was placed onto a flat rigid aluminum plate. The filler material slurry was poured into the mold until the mold was substantially full. The aluminum plate/mold assembly and its contents were then placed within a vacuum chamber, and a vacuum level of about 28 inches (711 mm) of mercury was established within the chamber. After about 2 minutes, atmospheric pressure was re-established within the vacuum chamber and the aluminum plate/mold assembly and its contents were removed from the vacuum chamber. The mold and its contents were then placed on a Syntron magnetic vibrator (FMC, West Reading, PA). The vibrating table was turned on and the control knob was set to about 5. After about 1 minute the control knob was turned down to about 3 and the slurry mixture was scraped towards the middle of the mold utilizing a plastic spatula. After about 4 minutes of vibration with the control knob set at 3, residual water was scraped from the top of the slurry mixture, the vibrating table was turned off, and the preform within the mold was allowed to dry at room temperature for about 3 hours.

The preform was removed from the mold and placed onto a zirconia plate having dimensions of about 6 1/2 inches (165 mm) square by about 1/2 inch (13 mm) thick. The zirconia plate and preform were placed within a room temperature air atmosphere furnace. The temperature in the furnace was increased from about room temperature to about 100°C in about 1 hour. After maintaining a temperature of about 100°C for about 1 hour, the temperature in the furnace was increased to about 1100°C in about 8 hours. After maintaining a temperature of about 1100°C for about 2 hours, the temperature in the furnace was decreased to about room temperature in about 5 hours. The zirconia plate and preform were removed from the furnace.

A mixture to be used as a barrier coating comprising by volume about 50% DAG® 154 colloidal graphite (Acheson Colloids Company, Port Huron, MI) and about 50% denatured ethanol was prepared. An air brush was used to apply a thin layer of barrier coating to one side of the preform. The barrier coating was allowed to dry and an additional thin layer of barrier coating was applied in substantially the same manner. This procedure was repeated until about 0.28 grams of the barrier coating was applied.

As shown in Figure 7, a graphite boat 71 having internal dimensions of about 9 inches (229 mm) square by about 4 inches (102 mm) high and a wall thickness of about 1/2 inch (13 mm) was altered in the following manner. An about 8 1/2 inch (216 mm) by about 4 inch (102 mm) section was cut out of one side wall 72 of the graphite boat 71. An about 3/16 (5 mm) inch thick groove was cut into the bottom portion and side portions of the graphite boat 71 to accommodate a sliding door mechanism. A graphite plate 73 measuring about 9 inches (229 mm) wide by about 6 inches (152 mm) high and having a thickness of about 3/16 inch (5 mm) was placed into the grooves to form the sliding door mechanism. The inner surfaces of a portion of the graphite boat 71 were lined with a single sheet of GRAFOIL® graphite foil 74 (Union Carbide Company, Danbury, CT) measuring about 0.015 inch (0.4 mm) thick by making strategically located cuts and folds in the sheet. The folds in the GRAFOIL® sheet were cemented together with RIGIDLOCK® graphite cement (Polycarbon Corporation, Valencia, CA). The sliding gate mechanism was left unlined. A second graphite boat 75 having internal dimensions of about 1 1/2 inches (38 mm) by about 8 inches (203 mm) and a wall thickness of about 1/2 inch (13 mm) was placed into the graphite boat 71 next to the wall opposite the sliding door mechanism. Four holes 76 measuring about 5/16 inch (8 mm) in diameter were drilled through the bottom portion of the side wall of the second graphite boat 75 facing the sliding door mechanism. Six graphite riser rings 77 measuring about 1/4 inch (6 mm) high and having diameters of about 3/4 inch (19 mm) were strategically placed into the first graphite boat 71 to act as a support means for the preform. The graphite riser rings 77 were glued to the GRAFOIL® sheet utilizing GRAPHIBOND™ 551-R graphite cement (Aremco Products, Inc., Ossining, NY).

The preform 78 was placed onto the graphite riser rings 77 within the graphite boat 71 such that the uncoated side of the preform 78 contacted the graphite riser rings 77. A matrix metal ingot 79 comprising by weight about 15% silicon, 5.5% magnesium and the balance aluminum, and having a total weight of about 1496.5 grams, was placed into the second graphite boat 75. The graphite boat 71 and its contents were placed into a resistance heated controlled atmosphere furnace at about room temperature. The furnace was sealed, evacuated to about 30 inches (762 mm) of mercury vacuum, and backfilled with nitrogen gas to about atmospheric pressure. This procedure was repeated a second time. A nitrogen gas flow rate of about 5 liters per minute was established within the furnace. The temperature in the furnace was increased at a rate of about 200°C per hour to a level of about 800°C. After maintaining a temperature of about 800°C for about 16 hours, the furnace door was opened and the sliding door mechanism was pulled up utilizing a pair of stainless steel tongs to allow the remaining molten matrix metal drain into a steel boat containing sand. After substantially all of the remaining molten matrix metal had drained into the sand, the sliding gate mechanism was returned to its original position and the furnace door was closed, and the furnace and its contents were allowed to return to room temperature. The door was then opened, the graphite boat 71 and its contents were removed from the furnace and the formed metal matrix composite body was removed from the graphite boat 71.

### Example 7

This Example demonstrates the fabrication of a metal matrix composite material by providing a matrix metal spaced apart from the filler material and, when molten, the matrix metal flows onto the filler material to infiltrate it thereby forming a metal matrix composite body.

Figure 8 shows a setup employed to make a highly loaded metal matrix composite body. Specifically, about 1500 grams of a filler material mixture 85 comprising by weight about 3.0% magnesium particulate (-325 mesh, Hart Corporation, Tamaqua, PA) having a particle diameter less than about 45 microns and the balance 500 grit 39 CRYSTOLON® green silicon carbide particulate (Norton Company, Worcester, MA) having an average particle size of about 17 microns, was placed into a porcelain ball mill having a capacity of about 8.3 liters (U.S. Stoneware Corporation, Mahwah, NJ). About 4000 grams of alumina based milling media, each having a diameter of about 1.0 inch (25 mm) was placed into the ball mill. The filler material mixture was ball milled for about 2 hours, and then poured into a graphite boat 80 having a wall thickness of about 1/4 inch (6 mm) to 1/2 inch (13 mm) and whose interior measured about 6 1/2 inches (165 mm) square by about 4.0 inches (102 mm) deep. The interior of the graphite boat had previously been aerosol spray-coated with about four (4) thin coats of AERODAG® colloidal graphite 83 (Acheson Colloids Company, Port Huron, MI) and then dried at a temperature of about 380°C in air for about 2 hours.

The graphite boat 80 and its contents were then placed into a vacuum drying oven and held at a temperature of about 225°C for about 12 hours to remove any residual moisture from the ball milled filler material 85. The graphite boat 80 was then shaken to level the filler material contained within and then tapped gently several times to pack the filler material particles more closely together. A layer of magnesium particulate 84 (-325 mesh, Hart Company, Tamaqua, PA) having a particle diameter less than about 45 microns was then sprinkled substantially evenly over the top surface of the filler material 85 until a concentration of about 0.1 gram per square inch (16 mg/c²) had been achieved.

Several ingots of a matrix metal 82 comprising by weight about 12.0% silicon and the balance aluminum, and totaling about 2,286 grams in mass, were placed into a second graphite boat 81 whose interior measured about 6 1/2 inches (165 mm) square by about 4.0 inches (102 mm) deep and whose wall thickness measured about 1/4 (6 mm) to 1/2 (13 mm) inch thick. This second graphite boat 81 also featured an approximately 2.0 inch (51 mm) diameter hole in the base. The top opening of this second graphite boat 81 was covered loosely with a sheet of GRAFOIL® graphite foil 86 (Union Carbide Company, Carbon Products Division, Cleveland, OH) whose edges were folded down over the sides of the second graphite boat 81. The second graphite boat 81 and its contents were then placed directly atop the first graphite boat 80 and its contents and both were placed into a retort furnace. About 30 grams of aluminum nitride particulate 87 (Advanced Refractory Technologies, Inc., Buffalo, NY) was placed into a refractory crucible 88 which in turn was placed into the retort furnace adjacent to the stacked graphite boats 80, 81 to help gather residual oxidizing gases from the retort atmosphere.

The retort was sealed and the retort atmosphere was then evacuated using a mechanical roughing pump. The retort was then backfilled with nitrogen gas to approximately atmospheric pressure. A nitrogen gas flow rate through the retort of about 15 liters per minute was established and maintained. The furnace was then heated from about room temperature to a temperature of about 225°C at a rate of about 400°C per hour. After maintaining a temperature of about 225°C for about 12 hours, the temperature was then increased to about 525°C, again at a rate of about 400°C per hour. After maintaining a temperature of about 525°C for about 1 hour, the temperature was then further increased to about 780°C again at a rate of about 400°C per hour. After maintaining a temperature of about 780°C for about 3 hours, the retort chamber was opened and the stacked graphite boats 80, 81 were removed to reveal that the matrix metal 82 had melted and spilled through the hole in the base of the upper graphite boat 81 onto the filler material 85 in the bottom graphite boat 80 and the matrix metal 82 had spontaneously infiltrated the filler material 85 to form a highly loaded metal matrix composite. The second graphite boat 81 was removed from the first graphite boat 80 and the first graphite boat 80 containing the formed highly loaded metal matrix composite was placed onto a chill plate to effect directional solidification of the metal matrix composite body contained within the boat. The exposed surface of the metal matrix composite body was covered with a sufficient amount of FEEDOL® No. 9 hot topping particulate mixture (Foseco, Inc., Cleveland, OH) to assist in maintaining the temperature gradient during directional solidification. Upon cooling to about room temperature, the highly loaded metal matrix composite body was removed from the graphite boat 80 and was surface cleaned by grit blasting.

## Claims

1. A method for making a metal matrix composite comprising:
providing a permeable mass comprising a filler or a preform;
spacing a solid matrix metal apart from said permeable mass by suspending it above said permeable mass, by separating it from said permeable mass by an expendable material or by providing it in a separate refractory vessel;
providing an infiltrating atmosphere;
heating said solid matrix metal to a temperature which renders the matrix metal molten;
inducing the flow of said molten matrix metal so as to contact at least a portion of a surface of the permeable mass so as to permit infiltration to occur, wherein an infiltration enhancer is formed in at least a portion of said permeable mass in a separate step prior to said contacting of said molten matrix metal and said permeable mass; and
spontaneously infiltrating at least a portion of the permeable mass with molten matrix metal.

2. The method of claim 1, wherein an expendable material is placed between said solid matrix metal and said permeable mass and said expendable material maintains a separation between said solid matrix metal and said permeable mass until said solid matrix metal becomes molten, and wherein said expendable material volatilizes when contacted by said molten matrix metal.

3. The method of claim 1 or claim 2, wherein an infiltration enhancer is formed in at least a portion of said permeable mass prior to said contacting of said molten matrix metal and said permeable mass, and wherein said infiltrating atmosphere communicates with said permeable mass for only a portion of the infiltration.

4. The method of claim 3, wherein said infiltrating atmosphere communicates with said permeable mass prior to rendering said matrix metal molten and wherein a substantially inert atmosphere communicates with said permeable mass for at least a portion of the infiltration.

5. The method of claim 1, wherein said permeable mass, at least initially, comprises a filler, and an infiltration enhancer is formed in at least a portion of said filler prior to said molten matrix metal and said filler contacting, said infiltration enhancer being formed in at least one apparatus selected from the group consisting of a rotary kiln and a fluidized bed.

6. A method for making a metal matrix composite comprising:
providing a permeable mass comprising a filler or a preform;
providing an infiltration enhancer in at least a portion of said permeable mass;
spacing a solid matrix metal apart from said permeable mass by suspending it above said permeable mass, by separating it from said permeable mass by an expendable material or by providing it in a separate refractory vessel;
providing an infiltrating atmosphere;
heating said solid matrix metal to a temperature which renders the matrix metal molten;
inducing the flow of said molten matrix metal so as to contact at least a portion of a surface of said permeable mass at a time after said infiltration enhancer has been provided in said permeable mass in a separate, prior step; and
spontaneously infiltrating at least a portion of the permeable mass with molten matrix metal.

7. A method for making a metal matrix composite comprising:
providing a permeable mass of filler or a preform;
communicating an infiltration enhancer precursor with at least a portion of said permeable mass;
communicating an infiltrating atmosphere with said infiltration enhancer precursor and causing said infiltration enhancer precursor to form infiltration enhancer in at least a portion of said permeable mass;
spacing a solid matrix metal apart from said permeable mass by suspending it above said permeable mass, by separating it from said permeable mass by an expendable material or by providing it in a separate refractory vessel;
heating said solid matrix metal to a temperature which renders the matrix metal molten;
inducing the flow of said molten matrix metal so as to contact at least a portion of a surface of said permeable mass after said infiltration enhancer has formed in a separate, prior step before introducing molten matrix metal; and
spontaneously infiltrating at least a portion of the permeable mass with molten matrix metal.

8. The method of claim 7, wherein said infiltration enhancer is formed by a reaction between said infiltration enhancer precursor and said infiltrating atmosphere, said matrix metal comprises aluminum, said infiltration enhancer precursor comprises magnesium and said infiltrating atmosphere comprises nitrogen.

9. The method of any one of claims 7 or 8, wherein said permeable mass at least initially comprises a filler and said infiltration enhancer is caused to form in said filler when said filler is placed in a rotary kiln, wherein said infiltration enhancer precursor and said infiltrating atmosphere communicate with each other and said filler in said rotary kiln and said infiltration enhancer is formed on at least a portion of the surface of said filler, and wherein said filler containing said infiltration enhancer is placed into a mold prior to said molten matrix metal contacting said filler.

10. The method of any one of claims 7 or 8, wherein said permeable mass at least initially comprises a filler and said infiltration enhancer is formed in said filler by processing said filler within a fluidized bed, wherein said infiltration enhancer precursor and said infiltrating atmosphere communicate with each other and said filler in said fluidized bed and said infiltration enhancer is formed on at least a portion of the surface of said filler, wherein said infiltrating atmosphere flows through said filler, thereby creating said fluidized bed, and wherein said filler containing said infiltration enhancer is placed into a mold prior to said molten matrix metal contacting said filler.

11. A method for making a metal matrix composite body comprising:
providing an apparatus;
placing a filler material into said apparatus;
introducing an infiltration enhancer precursor into said apparatus;
introducing an infiltrating atmosphere into into said apparatus;
at least partially reacting said infiltrating atmosphere with said infiltration enhancer precursor to form an infiltration enhancer on at least a portion of the surface of said filler material in a separate, prior step before introducing molten matrix metal;
providing a reservoir of a molten matrix metal spaced apart from the filler material;
contacting said filler material, containing in at least a portion thereof said infiltration enhancer, and said molten matrix metal to induce said molten matrix metal to spontaneously infiltrate said filler material; and
solidifying said infiltrated matrix metal thereby forming said metal matrix composite.

12. The method of claim 11, wherein said apparatus comprises at least one of a rotary kiln and a fluidized bed.

13. The method of claim 11, wherein said apparatus comprises a refractory container containing said filler material and said infiltrating atmosphere is introduced through a tube communicating with at least an inner portion of said apparatus.

14. The method of any of claims 11-13, wherein said introducing of said infiltrating atmosphere comprises flowing an infiltrating atmosphere into said apparatus.

## Patentansprüche

1. Verfahren zur Herstellung eines Metallmatrixverbundkörpers, das umfaßt:
Bereitstellen einer permeablen Masse, die einen Füllstoff oder eine Vorform umfaßt;
Anordnen eines festen Matrixmetalls in einem Abstand von der genannten permeablen Masse, indem man es über der genannten permeablen Masse aufhängt, von der permeablen Masse durch ein verlorenes Material getrennt hält oder dadurch, daß man es in einem separaten feuerfesten Behälter bereitstellt;
Bereitstellen einer Infiltrationsatmosphäre;
Erhitzen des genannten festen Matrixmetalls auf eine Temperatur, die das Matrixmetall zum Schmelzen bringt;
Einleiten eines Flusses des genannten schmelzflüssigen Matrixmetalls, so daß dieses wenigstens einen Teil einer Oberfläche der permeablen Masse erreicht, so daß das Auftreten einer Infiltration ermöglicht wird, wobei ein Infiltrationsverstärker in wenigstens einem Teil der genannten permeablen Masse in einer getrennten Stufe vor dem Inkontaktbringen des genannten schmelzflüssigen Matrixmetalls und der genannten permeablen Masse gebildet wird; und
spontanes Infiltrieren wenigstens eines Teils der permeablen Masse mit schmelzflüssigem Matrixmetall.

2. Verfahren nach Anspruch 1, bei dem ein verlorenes Material zwischen dem genannten festen Matrixmetall und der genannten permeablen Masse angeordnet wird, und das genannte verlorene Material eine Trennung zwischen dem genannten Matrixmetall und der genannten permeablen Masse aufrechterhält, bis das genannte feste Matrixmetall schmelzflüssig wird, und wobei das genannte verlorene Material sich verflüchtigt, wenn es mit dem genannten schmelzflüssigen Matrixmetall in Berührung kommt.

3. Verfahren nach Anspruch 1 oder Anspruch 2, bei dem ein Infiltrationsverstärker in wenigstens einem Teil der genannten permeablen Masse vor dem Kontakt des genannten schmelzflüssigen Matrixmetalls mit der permeablen Masse gebildet wird, und wobei die genannte Infiltrationsatmosphäre mit der genannten permeablen Masse nur während eines Teils der Infiltration in Verbindung steht.

4. Verfahren nach Anspruch 3, bei dem die Infiltrationsatmosphäre mit der genannten permeablen Masse in Verbindung steht, bevor das Matrixmetall schmelzflüssig gemacht wird, und wobei eine im wesentlichen inerte Atmosphäre mit der genannten permeablen Masse für wenigstens einen Teil der Infiltration in Verbindung steht.

5. Verfahren nach Anspruch 1, bei dem die genannte permeable Masse, wenigstens anfänglich, ein Füllstoffmaterial umfaßt, und wobei ein Infiltrationsverstärker in wenigstens einem Teil des genannten Füllstoffs vor dem Kontakt des genannten schmelzflüssigen Matrixmetalls mit dem Füllstoff gebildet wird, wobei der genannte Infiltrationsverstärker in wenigstens einer Vorrichtung gebildet wird, die aus der Gruppe ausgewählt ist, die aus einem Drehrohrofen und einem Wirbelbett besteht.

6. Verfahren zur Herstellung eines Metallmatrix-Verbundkörpers, das umfaßt:
Bereitstellen einer permeablen Masse, die einen Füllstoff oder eine Vorform umfaßt;
Bereitstellen eines Infiltrationsverstärkers in wenigstens einem Teil der genannten permeablen Masse;
Anordnung eines festen Matrixmetalls in einem Abstand von der genannten permeablen Masse, indem man es über der genannten permeablen Masse aufhängt, von der permeablen Masse durch ein verlorenes Material getrennt hält oder dadurch, daß man es in einem separaten feuerfesten Behälter bereitstellt;
Bereitstellen einer Infiltrationsatmosphäre;
Erhitzen des genannten festen Matrixmetalls auf eine Temperatur, die das Matrixmetall zum Schmelzen bringt;
Einleiten des Flusses des genannten schmelzflüssigen Matrixmetalls, so daß es wenigstens einen Teil einer Oberfläche der genannten permeablen Masse zu einem Zeitpunkt erreicht, nachdem der genannte Infiltrationsverstärker in der genannten permeablen Masse in einem separaten, vorausgehenden Schritt erzeugt wurde; und
spontanes Infiltrieren wenigstens eines Teils der permeablen Masse mit schmelzflüssigem Matrixmetall.

7. Verfahren zur Herstellung eines Metallmatrixverbundkörpers, das umfaßt:
Bereitstellung einer permeablen Masse eines Füllstoffs oder einer Vorform;
Inverbindungbringen eines Infiltrationsverstärkervorläufers mit wenigstens einem Teil der genannten permeablen Masse;
Inverbindungbringen einer Infiltrationsatmosphäre mit dem genannten Infiltrationsverstärkervorläufer und Bewirken, daß der genannte Infiltrationsverstärkervorläufer in wenigstens einem Teil der genannten permeablen Masse einen Infiltrationsverstärker bildet;
Anordnung eines festen Matrixmetalls in einem Abstand von der genannten permeablen Masse, indem man es über der genannten permeablen Masse aufhängt, von der permeablen Masse durch ein verlorenes Material getrennt hält oder dadurch, daß man es in einem separaten feuerfesten Behälter bereitstellt;
Erhitzen des genannten festen Matrixmetalls auf eine Temperatur, die das Matrixmetall zum Schmelzen bringt;
Einleiten des Flusses des genannten schmelzflüssigen Matrixmetalls, so daß es wenigstens einen Teil einer Oberfläche der genannten permeablen Masse erreicht, nachdem der genannte Infiltrationsverstärker in einem separaten, vorausgehenden Schritt vor der Einführung des schmelzflüssigen Matrixmetalls gebildet wurde; und
spontanes Infiltrieren wenigstens eines Teils der permeablen Masse mit schmelzflüssigem Matrixmetall.

8. Verfahren nach Anspruch 7, bei dem der genannte Infiltrationsverstärker durch eine Reaktion zwischen dem genannten Infiltrationsverstärkervorläufer und der genannten Infiltrationsatmosphäre gebildet wird, das genannte Matrixmetall Aluminium umfaßt, der genannte Infiltrationsverstärkervorläufer Magnesium umfaßt und die genannte Infiltrationsatmosphäre Stickstoff umfaßt.

9. Verfahren nach irgendeinem der Ansprüche 7 oder 8, bei dem die genannte permeable Masse wenigstens anfänglich einen Füllstoff umfaßt und man die Bildung des Infiltrationsverstärkers in dem genannten Füllstoff veranlaßt, wenn der genannte Füllstoff in einem Drehrohrofen angeordnet ist, wobei der genannte Infiltrationsverstärkervorläufer und die genannte Infiltrationsatmosphäre miteinander und dem genannten Füllstoff in dem genannten Drehrohrofen in Verbindung stehen und der genannte Infiltrationsverstärker auf wenigstens einem Teil der Oberfläche des genannten Füllstoffs gebildet wird, und wobei der genannte Füllstoff, der den genannten Infiltrationsverstärker enthält, in einer Form angeordnet wird, bevor das genannte schmelzflüssige Matrixmetall mit dem genannten Füllstoff in Kontakt kommt.

10. Verfahren nach irgendeinem der Ansprüche 7 oder 8, bei dem die genannte permeable Masse wenigstens anfänglich einen Füllstoff umfaßt und der genannte Infiltrationsverstärker in dem genannten Füllstoff dadurch gebildet wird, daß man den genannten Füllstoff in einem Wirbelbett verarbeitet, wobei der genannte Infiltrationsverstärkervorläufer und die genannte Infiltrationsatmosphäre miteinander und mit dem genannten Füllstoff in dem genannten Wirbelbett in Verbindung stehen und der genannte Infiltrationsverstärker auf wenigstens einem Teil der Oberfläche des genannten Füllstoffs gebildet wird, wobei die genannte Infiltrationsatmosphäre durch den genannten Füllstoff strömt, wodurch das genannte Wirbelbett erzeugt wird, und wobei der genannte Füllstoff, der den genannten Infiltrationsverstärker enthält, in einer Form angeordnet wird, bevor das genannte schmelzflüssige Matrixmetall mit dem Füllstoff in Kontakt kommt.

11. Verfahren zur Herstellung eines Metallmatrixverbundkörpers, das umfaßt:
Bereitstellen einer Vorrichtung;
Anordnung eines Füllstoffmaterials in der genannten Vorrichtung;
Einführen eines Infiltrationsverstärkervorläufers in die genannte Vorrichtung;
Einführen einer Infiltrationsatmosphäre in die genannte Vorrichtung;
wenigstens teilweises Umsetzen der genannten Infiltrationsatmosphäre mit dem genannten Infiltrationsverstärkervorläufer, um einen Infiltrationsverstärker auf wenigstens einem Teil der Oberfläche des genannten Füllstoffmaterials in einem getrennten, vorausgehenden Schritt zu bilden, bevor man das schmelzflüssige Matrixmetall einführt;
Bereitstellen eines Vorrats an schmelzflüssigem Matrixmetall, der in einem Abstand von dem genannten Füllstoffmaterial angeordnet ist;
Inkontaktbringen des genannten Füllstoffmaterials, das in wenigstens einem Teil davon den genannten Infiltrationsverstärker enthält, und des genannten schmelzflüssigen Matrixmetalls, um zu veranlassen, daß das genannte schmelzflüssige Matrixmetall das genannte Füllstoffmaterial spontan infiltriert; und
Verfestigen des genannten infiltrierten Matrixmetalls, wodurch der genannte Metallmatrixverbundkörper gebildet wird.

12. Verfahren nach Anspruch 11, bei dem die genannte Vorrichtung wenigstens eines von einem Drehrohrofen und einem Wirbelbett umfaßt.

13. Verfahren nach Anspruch 11, bei dem die genannte Vorrichtung einen feuerfesten Behälter umfaßt, der das genannte Füllstoffmaterial enthält, und bei dem die genannte Infiltrationsatmosphäre durch ein Rohr zugeführt wird, das wenigstens mit einem inneren Teil der genannten Vorrichtung kommuniziert.

14. Verfahren nach irgendeinem der Ansprüche 11 bis 13, bei dem das genannte Einführen der genannten Infiltrationsatmosphäre das Einleiten einer Infiltrationsatmosphäre in die genannte Vorrichtung umfaßt.

## Revendications

1. Procédé de production d'un composite à matrice de métal, qui comprend les étapes consistant :
à prendre une masse perméable comprenant une charge ou une préforme ;
à disposer un métal de matrice solide à l'écart de cette masse perméable en le suspendant au-dessus de la masse perméable, en le séparant de cette masse perméable par une matière non réutilisable ou en le plaçant dans un récipient réfractaire séparé ;
à créer une atmosphère d'infiltration ;
à chauffer ce métal de matrice solide à une température qui fait fondre le métal de matrice ;
à induire l'écoulement de ce métal de matrice fondu de manière qu'il entre en contact avec une partie au moins d'une surface de la masse perméable pour permettre à une infiltration de se produire, un agent favorisant l'infiltration étant formé dans une partie au moins de cette masse perméable dans une étape séparée précédant la mise en contact du métal de matrice fondu et de la masse perméable ; et
à laisser du métal de matrice fondu s'infiltrer spontanément dans une partie au moins de la masse perméable.

2. Procédé suivant la revendication 1, dans lequel une matière non réutilisable est disposée entre le métal de matrice solide et la masse perméable et cette matière non réutilisable maintient une séparation entre le métal de matrice solide et la masse perméable jusqu'à ce que ce métal de matrice solide passe à l'état fondu, et dans lequel la matière non réutilisable se volatilise lorsqu'elle se trouve au contact du métal de matrice fondu.

3. Procédé suivant la revendication 1 ou la revendication 2, dans lequel un agent favorisant l'infiltration est formé dans une partie au moins de la masse perméable en question préalablement à l'entrée en contact du métal de matrice fondu avec cette masse perméable, et l'atmosphère d'infiltration communique avec la masse perméable sur une partie seulement de l'infiltration.

4. Procédé suivant la revendication 3, dans lequel l'atmosphère d'infiltration communique avec la masse perméable avant que le métal de matrice passe à l'état fondu et une atmosphère sensiblement inerte communique avec la masse perméable sur une partie au moins de l'infiltration.

5. Procédé suivant la revendication 1, dans lequel la masse perméable, au moins initialement, comprend une charge, et un agent favorisant l'infiltration est formé dans une partie au moins de cette charge avant le contact entre le métal de matrice fondu et la charge, cet agent favorisant l'infiltration étant formé dans au moins un appareil choisi entre un four rotatif et un lit fluidisé.

6. Procédé de production d'un composite à matrice de métal, qui comprend les étapes consistant :
à prendre une masse perméable comprenant une charge ou une préforme ;
à avoir un agent favorisant l'infiltration dans une partie au moins de cette masse perméable ;
à disposer un métal de matrice solide à l'écart de cette masse perméable en le suspendant au-dessus de cette masse perméable, en le séparant de cette masse perméable par une matière non réutilisable ou en le plaçant dans un récipient réfractaire séparé ;
à créer une atmosphère d'infiltration ;
à chauffer ce métal de matrice solide à une température qui le fait passer à l'état fondu ;
à induire l'écoulement de ce métal de la matrice fondu de manière qu'il entre en contact avec une partie au moins d'une surface de la masse perméable à un moment qui se situe après que l'agent favorisant l'infiltration a été prévu dans la masse perméable dans une étape préalable séparée ; et
à laisser du métal de matrice fondu s'infiltrer spontanément dans une partie au moins de la masse perméable.

7. Procédé de production d'un composite à matrice métallique, qui comprend les étapes consistant :
à prendre une masse perméable de charge ou d'une préforme ;
à mettre en communication un précurseur d'agent favorisant l'infiltration avec une partie au moins de cette masse perméable ;
à faire communiquer une atmosphère d'infiltration avec ce précurseur d'agent favorisant l'infiltration et à amener ce précurseur d'agent favorisant l'infiltration à former un agent favorisant l'infiltration dans une partie au moins de la masse perméable en question ;
à placer un métal de matrice solide à l'écart de cette masse perméable en le suspendant au-dessus de la masse perméable, en le séparant de cette masse perméable par une matière non réutilisable ou en le plaçant dans un récipient réfractaire séparé ;
à chauffer ce métal de matrice solide à une température qui fait passer le métal de matrice à l'état fondu ;
à induire l'écoulement de ce métal de matrice fondu de manière qu'il entre en contact avec une partie au moins d'une surface de la masse perméable après que l'agent favorisant l'infiltration a été formé dans une étape préalable, séparée et précédant l'introduction du métal de matrice fondu ; et
à laisser du métal de matrice fondu s'infiltrer spontanément dans une partie au moins de la masse perméable.

8. Procédé suivant la revendication 7, dans lequel l'agent favorisant l'infiltration est formé par une réaction entre le précurseur d'agent favorisant l'infiltration et l'atmosphère d'infiltration, le métal de matrice comprenant de l'aluminium, le précurseur d'agent favorisant l'infiltration comprenant du magnésium et l'atmosphère d'infiltration comprenant de l'azote.

9. Procédé suivant l'une quelconque des revendications 7 et 8, dans lequel la masse perméable, au moins initialement, comprend une charge et l'agent favorisant l'infiltration est amené à se former dans cette charge lorsque cette dernière est disposée dans un four rotatif, dans lequel le précurseur de l'agent favorisant l'infiltration et l'atmosphère d'infiltration communiquent entre eux et avec la charge dans le four rotatif et l'agent favorisant l'infiltration est formé sur une partie au moins de la surface de la charge, et dans lequel la charge contenant cet agent favorisant l'infiltration est disposée dans un moule avant l'entrée en contact du métal de matrice fondu avec la charge.

10. Procédé suivant l'une quelconque des revendications 7 et 8, dans lequel la masse perméable, au moins initialement, comprend une charge et l'agent favorisant l'infiltration est formé dans cette charge par traitement de cette dernière dans un lit fluidisé, dans lequel le précurseur d'agent favorisant l'infiltration et l'atmosphère d'infiltration communiquent entre eux et avec la charge dans ce lit fluidisé et l'agent favorisant l'infiltration est formé sur une partie au moins de la surface de la charge, dans lequel l'atmosphère d'infiltration s'écoule à travers la charge en créant ainsi le lit fluidisé en question, et dans lequel la charge contenant l'agent favorisant l'infiltration est disposée dans un moule avant l'entrée en contact du métal de matrice fondu avec la charge.

11. Procédé de production d'un corps composite à matrice de métal, qui comprend les étapes consistant :
à préparer un appareil ;
à disposer une charge dans cet appareil ;
à introduire un précurseur d'agent favorisant l'infiltration dans cet appareil ;
à introduire une atmosphère d'infiltration dans cet appareil ;
à faire réagir au moins partiellement cette atmosphère d'infiltration avec de précurseur d'agent favorisant l'infiltration pour former un agent favorisant l'infiltration sur une partie au moins de la surface de la charge dans une étape séparée qui précède l'introduction du métal de matrice fondu ;
à prévoir une réserve de métal de matrice fondu espacée de la charge ;
à faire entrer cette charge, contenant dans une partie au moins l'agent favorisant l'infiltration, en contact avec le métal de matrice fondu pour que le métal de matrice fondu puisse s'infiltrer spontanément dans la charge ; et
à laisser le métal de matrice infiltré se solidifier pour former ainsi le composite à matrice de métal.

12. Procédé suivant la revendication 11, dans lequel l'appareil comprend l'un au moins d'un four rotatif et d'un lit fluidisé.

13. Procédé suivant la revendication 11, dans lequel l'appareil comprend un récipient réfractaire contenant la charge, et l'atmosphère d'infiltration est introduite par un tube communiquant avec au moins une partie interne de l'appareil.

14. Procédé suivant l'une quelconque des revendications 11 à 13, dans lequel l'introduction de l'atmosphère d'infiltration comprend l'entrée par écoulement d'une atmosphère d'infiltration dans l'appareil en question.
